# EUROPÄISCHE PATENTANMELDUNG

(11) **EP 3 832 783 A1**
(43) Veröffentlichungstag der Anmeldung: **09.06.2021**
(21) Anmeldenummer: 20211624.0
(22) Anmeldetag: 03.12.2020
(51) Int. Cl.: H01M 10/613, H01M 10/647, H01M 10/6556, H01M 10/6557, H01M 10/6567

(54) **KÜHLKÖRPER, ELEKTRISCHES SYSTEM UND VERFAHREN ZUR HERSTELLUNG EINES ELEKTRISCHEN SYSTEMS**

(30) Priorität: 03.12.2019 DE 102019132835; 03.12.2019 DE 102019132827
(71) Anmelder: Yazaki Systems Technologies GmbH, 93059 Regensburg (DE)
(72) Erfinder: JUNGTÄUBL, Daniel, 93049 Regensburg (DE); FRANK, Lennart, 93059 Regensburg (DE)
(74) Vertreter: Patentanwaltskanzlei WILHELM & BECK

(57) **Zusammenfassung**

Die Erfindung betrifft einen Kühlkörper (15), ein elektrisches System (5) mit solch einem Kühlkörper (15), und ein Verfahren zur Herstellung eines elektrischen Systems (5), wobei der Kühlkörper (15) einen ersten Rippenabschnitt (45) mit einem fluiddicht ausgebildeten und mit einem Kühlfluid (26) füllbaren ersten Kühlkanal (175), einen zweiten Rippenabschnitt (50) mit einem fluiddicht ausgebildeten und mit dem Kühlfluid (26) füllbaren zweiten Kühlkanal (210) und einen Verbindungskörper (65, 66) aufweist, wobei der Verbindungskörper (65, 66) thermisch leitfähig ausgebildet ist und eine sich in Querrichtung erstreckende erste Stirnseite (240) zur Anlage an und thermischen Kopplung mit einer Wärmequelle (27) einer Wärmequellenanordnung (19) aufweist, wobei der Verbindungskörper (65, 66) eine erste Aufnahme (130) und eine in Querrichtung versetzt angeordnete zweite Aufnahme (140) aufweist, wobei der erste Rippenabschnitt (45) und der zweite Rippenabschnitt (50) in Querrichtung beabstandet zueinander angeordnet sind, wobei der erste Rippenabschnitt (45) in die erste Aufnahme (130) und der zweite Rippenabschnitt (50) in die zweite Aufnahme (140) des Verbindungskörpers (65, 66) eingreifen und thermisch mit dem Verbindungskörper (65, 66) gekoppelt sind.

## Beschreibung

Die Erfindung betrifft einen Kühlkörper gemäß Patentanspruch 1, ein elektrisches System gemäß Patentanspruch 12 und ein Verfahren zur Herstellung gemäß Patentanspruch 15.

Diese Patentanmeldung beansprucht die Priorität der deutschen Patentanmeldungen DE 10 2019 132 835.7 und DE 10 2019 132 827.6, deren Offenbarungsgehalt hiermit durch Rückbezug aufgenommen wird.

Aus US 2012/0270075 A1 ist ein elektrischer Energiespeicher bekannt.

Es ist Aufgabe der Erfindung, einen verbesserten Kühlkörper zur Kühlung eines elektrischen Energiespeichers, insbesondere eines Hochstromenergiespeichers eines Fahrzeugs, und einen verbesserten elektrischen Energiespeicher und ein verbessertes Verfahren zur Herstellung solch eines elektrischen Energiespeichers bereitzustellen.

Diese Aufgabe wird mittels eines Kühlkörpers gemäß Patentanspruch 1, eines elektrischen Systems gemäß Patentanspruch 12 und mittels eines Verfahrens gemäß Patentanspruch 15 gelöst. Vorteilhafte Ausführungsformen sind in den abhängigen Ansprüchen angegeben.

Es wurde erkannt, dass ein verbesserter Kühlkörper für ein elektrisches System, insbesondere für einen elektrischen Energiespeicher, dadurch bereitgestellt werden kann, dass der Kühlkörper einen ersten Rippenabschnitt mit einem fluiddicht ausgebildeten und mit einem Kühlfluid füllbaren ersten Kühlkanal, einen zweiten Rippenabschnitt mit einem fluiddicht ausgebildeten und mit dem Kühlfluid füllbaren zweiten Kühlkanal und einen Verbindungskörper aufweist. Der Verbindungskörper ist thermisch leitfähig ausgebildet und weist eine sich in Querrichtung erstreckende erste Stirnseite zur Anlage an und thermischen Kopplung mit einer Wärmequelle einer Wärmequellenanordnung auf. Der Verbindungskörper weist eine erste Aufnahme und eine in Querrichtung versetzt angeordnete zweite Aufnahme auf, wobei der erste Rippenabschnitt und der zweite Rippenabschnitt in Querrichtung beabstandet zueinander angeordnet sind. Der erste Rippenabschnitt greift in die erste Aufnahme und der zweite Rippenabschnitt greift in die zweite Aufnahme des Verbindungskörpers ein und beide Rippenabschnitte sind thermisch mit dem Verbindungskörper gekoppelt.

Diese Ausgestaltung hat den Vorteil, dass durch den Verbindungskörper ein direkter Kontakt zwischen einer elektrischen Energiezelle oder einer Elektronikebene einer Leistungselektronik und dem ersten Rippenabschnitt vermieden werden kann, sodass Undichtigkeiten im Kühlkreislauf vermieden werden können. Ferner kann der Verbindungskörper eine Funktion eines Wärmespreizers und Wärmepuffers übernehmen, um kurzzeitige, hohe Temperaturspitzen in der Energiezelle oder der Elektronikebene zu puffern und an das im ersten Kühlkanal strömende Kühlfluid abzuführen. Ferner kann je nach geometrischer Ausgestaltung der Energiezelle der erste Rippenabschnitt derart in dem Verbindungskörper positioniert werden, dass der erste Rippenabschnitt und damit der erste Kühlkanal konzentriert im Bereich eines Hotspots, beispielsweise nahe einer Elektrode der Energiezelle oder eines elektronischen Halbleiterbauelements, insbesondere eines elektronischen Halbleiterschaltelements, beispielsweise eines MOSFET, positioniert ist.

Diese Ausgestaltung hat weiter den Vorteil, dass auch bei einer breiten Ausgestaltung des Verbindungskörpers, insbesondere wenn die Energiezelle eine hohe Kapazität aufweist, die Energiezelle besonders gut mittels des Verbindungskörpers gekühlt werden kann. Ferner ist die Montage eines Stapels, aufweisend eine Vielzahl von abwechselnd aneinander angeordneten Verbindungskörpern und Energiezellen, vormontierbar. Dabei kann beispielsweise der Stapel verpresst werden. Die Verpressung bewirkt ferner, dass ein Aufschwellen der Energiezelle bei einer thermischen Belastung reduziert ist. Zusätzlich wäre eine stoffschlüssige Verbindung der Energiezelle mit dem Verbindungskörper denkbar. Auch wird eine Degeneration der Energiezelle durch das Verpressen der Energiezelle verhindert oder reduziert.

Des Weiteren hat diese Ausgestaltung den Vorteil, dass besonders einfach der Verbindungskörper formschlüssig mit dem ersten Rippenabschnitt verbunden werden kann, beispielsweise dadurch, dass der Verbindungskörper auf den ersten Rippenabschnitt aufgesteckt wird. Durch die korrespondierende Ausgestaltung des ersten Rippenabschnitts und der ersten Aufnahme und des zweiten Rippenabschnitts und der zweiten Aufnahme kann ferner ein Materialverbrauch von Wärmeleitmittel, das zur thermischen Kopplung des ersten Rippenabschnitts in der ersten Aufnahme angeordnet werden kann, reduziert sein.

In einer weiteren Ausführungsform weist der Kühlkörper wenigstens einen beabstandet zu dem Verbindungskörper angeordneten und, vorzugsweise identisch zu dem Verbindungskörper ausgebildeten, weiteren Verbindungskörper auf, wobei der weitere Verbindungskörper auf einer zum Verbindungskörper zugewandten Seite eine zweite Stirnseite aufweist. Die erste Stirnseite und die zweite Stirnseite begrenzen einen Zwischenraum zur Aufnahme der Wärmequelle der Wärmequellenanordnung. Vorzugsweise ist der Zwischenraum nutförmig ausgebildet.

Durch die nutförmige Ausgestaltung eignet sich der Zwischenraum insbesondere zur Unterbringung von Pouch-Zellen, die beispielsweise als Lithium-Ionenakku ausgebildet sind und/oder zur Unterbringung von Elektronikebenen einer Leistungselektronik. Ferner wird dadurch eine beidseitige Kühlung der Energiezelle und/oder der Elektronikebene über die erste und zweite Stirnseite sichergestellt, sodass eine hohe Lebensdauer der Energiezelle und/oder der Leistungselektronik sichergestellt wird, da auch ein lokales Überhitzen der Energiezelle vermieden werden kann.

In einer weiteren Ausführungsform weist der Kühlkörper mehrere entlang einer Achse versetzt zueinander angeordnete erste Rippenabschnitte auf, wobei die Rippenabschnitte parallel zueinander ausgerichtet sind. Jeweils ein erster Rippenabschnitt greift in einen Verbindungskörper ein und ist thermisch mit dem jeweiligen Verbindungskörper verbunden. Diese Ausgestaltung hat den Vorteil, dass eine hohe Anzahl von Wärmequellen, beispielsweise elektrischen Energiezellen, durch einen derart ausgebildeten Kühlkörper wirksam gekühlt werden kann.

In einer weiteren Ausführungsform ist der Verbindungskörper und/oder der weitere Verbindungskörper plattenförmig ausgebildet. Durch Verwendung von rechteckförmigen Geometrien für den Verbindungskörper kann mit geringem Aufwand der Verbindungskörper hergestellt werden. Ferner ist der elektrische Energiespeicher dadurch besonders kompakt ausgebildet und weist eine hohe Raumausnutzung auf.

In einer weiteren Ausführungsform weist der erste Kühlkanal jeweils einen auf einer dem Verbindungskörper abgewandten Seite angeordneten ersten Zulauf und einen ersten Rücklauf auf, wobei der erste Zulauf auf einer einer Seitenfläche des Verbindungskörpers zugewandten Seite angeordnet ist. Der erste Rücklauf ist auf einer der Seitenfläche gegenüberliegend in Querrichtung angeordneten weiteren Seitenfläche des Verbindungskörpers zugewandten Seite angeordnet. Dadurch wird sichergestellt, dass außenliegend der erste Kühlkanal mit besonders kaltem Kühlfluid durchströmt wird, sodass dadurch ein Bereich nahe an einer Anschlusselektrode der Energiezelle, der sich besonders stark im Betrieb der Energiezelle erwärmt, besonders stark durch das kalte Kühlfluid gekühlt wird. Ferner ist dadurch der Kühlkanal in dem ersten Rippenabschnitt besonders lang, sodass dadurch besonders viel Wärme aus dem Verbindungskörper aufgenommen werden kann.

In einer weiteren Ausführungsform weist der Verbindungskörper eine korrespondierend zum ersten Rippenabschnitt ausgebildete erste Aufnahme auf, wobei der erste Rippenabschnitt in die erste Aufnahme eingreift und mit einer Innenseite der ersten Aufnahme thermisch gekoppelt ist.

Von besonderem Vorteil ist, wenn der erste Rippenabschnitt einen ersten minimalen Abstand zu einer Seitenfläche des Verbindungskörpers und einen zweiten minimalen Abstand zu einer der Seitenfläche gegenüberliegend in Querrichtung angeordneten zweiten Seitenfläche aufweist, wobei der erste minimale Abstand unterschiedlich zu dem zweiten minimalen Abstand ist. Vorzugsweise ist der erste minimale Abstand kleiner als die Hälfte des zweiten minimalen Abstands. Diese Ausgestaltung hat den Vorteil, dass durch die nahe Anordnung des ersten Rippenabschnitts zu der Seitenfläche der Verbindungskörper außenseitig besonders stark gekühlt ist und somit die Energiezelle nahe der Anschlusselektrode ebenso besonders stark gekühlt ist.

In einer weiteren Ausführungsform weist der zweite Rippenabschnitt einen dritten minimalen Abstand zu der weiteren Seitenfläche und einen vierten minimalen Abstand zu dem ersten Rippenabschnitt auf, wobei der vierte minimale Abstand größer als der dritte minimale Abstand ist. Dadurch ist ebenso der zweite Rippenabschnitt außermittig angeordnet, sodass der Verbindungskörper durch die beiden Rippenabschnitte in Querrichtung besonders gut und gleichmäßig gekühlt ist und somit eine gleichmäßige Kühlung, insbesondere eine elektrodennahe Kühlung nahe der Anschlusselektrode der Energiezelle sichergestellt werden kann.

In einer weiteren Ausführungsform ist die Seitenfläche und/oder die weitere Seitenfläche plan ausgebildet. Vorzugsweise ist die Seitenfläche parallel zu der weiteren Seitenfläche ausgerichtet. Zusätzlich oder alternativ ist die Seitenfläche geneigt, vorzugsweise senkrecht zu der ersten Stirnseite ausgerichtet und vorzugsweise direkt an die erste Stirnseite angrenzend angeordnet. Diese Ausgestaltung hat den Vorteil, dass der Verbindungskörper besonders kostengünstig beispielsweise mittels eines Druckgussverfahrens aus einem thermisch leitfähigen Material, beispielsweise aus Aluminium und/oder einer Aluminiumlegierung, hergestellt werden kann.

In einer weiteren Ausführungsform weist der zweite Kühlkanal auf einer dem Verbindungskörper abgewandten Seite jeweils einen zweiten Zulauf und einen zweiten Rücklauf auf, wobei der zweite Rücklauf auf einer dem ersten Rippenabschnitt zugewandten Seite und der zweite Zulauf auf einer dem ersten Rippenabschnitt abgewandten Seite angeordnet ist. Dadurch kann elektrodennah zu einer weiteren Anschlusselektrode der Energiezelle, die gegenüberliegend zur Anschlusselektrode angeordnet ist, durch den zweiten Kühlkanal eine besonders intensive und starke Kühlung sichergestellt werden, sodass dort eine lokale Überhitzung durch einen Hotspot der Energiezelle vermieden werden kann.

In einer weiteren Ausführungsform weist der Kühlkörper einen sich in Längsrichtung erstreckenden Trägerabschnitt mit einer Anlagefläche zur Anordnung an der Energiezellenanordnung und/oder der Leistungselektronik auf, wobei der Trägerabschnitt innenseitig einen sich parallel zur Anlagefläche erstreckenden ersten Kanal und einen fluiddicht gegenüber dem ersten Kanal ausgebildeten und parallel zur Anlagefläche ausgerichteten zweiten Kanal begrenzt, wobei der erste Kanal und der zweite Kanal ausgebildet sind, das Kühlfluid zu führen, wobei der erste Kanal und der zweite Kanal in einer Richtung senkrecht zu der Anlagefläche zumindest abschnittsweise überdeckend ausgebildet sind, wobei der erste Rippenabschnitt und der Verbindungskörper geneigt, vorzugsweise senkrecht, zu der Anlagefläche angeordnet sind, wobei vorzugsweise der erste Kanal und/oder der zweite Kanal sich im Wesentlichen über eine gesamte Innenbreite des Trägerabschnitts erstreckt.

Dabei dient der erste Kanal als Verteiler und der zweite Kanal als Sammler. Durch die Integration in den Trägerabschnitt ist der Kühlkörper dadurch besonders kompakt ausgebildet. Auch ist eine Versorgung von den mehreren ersten Rippenabschnitten gemeinsam aus dem ersten Kanal mit Kühlfluid möglich, sodass weitere aufwändige hydraulische Verbindungen nicht notwendig sind.

In einer weiteren Ausführungsform weist der Kühlkörper einen Einlaufsteg auf, wobei der Einlaufsteg zwischen der zweiten Seitenwand und dem zweiten Kühlkanal in dem ersten Kanal angeordnet ist, wobei der Einlaufsteg an einer dritten Stirnseite des Trägerabschnitts beginnt und seitlich an allen in dem ersten Kanal mündenden zweiten Kühlkanälen vorbeigeführt ist, wobei der Einlaufsteg sich in einer Höhenrichtung vollständig zwischen dem Zwischensteg und dem ersten Plattenabschnitt erstreckt. Dadurch wird sichergestellt, dass alle ersten und zweiten Kanäle mit einem gleich kalten Kühlmittel versorgt werden.

In einer weiteren Ausführungsform sind der erste Rippenabschnitt und der Verbindungskörper geneigt, vorzugsweise senkrecht, zu der Anlagefläche angeordnet.

Ein besonders gutes elektrisches System, insbesondere ein besonders guter elektrischer Energiespeicher für ein Fahrzeug kann dadurch bereitgestellt werden, dass das System, insbesondere der elektrische Energiespeicher, den oben beschriebenen Kühlkörper und wenigstens eine Wärmequellenanordnung mit wenigstens einer Wärmequelle beispielsweise einer Energiezelle, aufweist. Der Kühlkörper ist mit der Wärmquellenanordnung thermisch gekoppelt und ausgebildet, die Wärmequellenanordnung zu kühlen.

Diese Ausgestaltung hat den Vorteil, dass die Wärmequellenanordnung eine Energiezellenanordnung mit wenigstens einer Energiezelle aufweist, die in dem Zwischenraum angeordnet ist. Die Energiezelle liegt mit einer ersten Zellenstirnseite an der ersten Stirnseite an und ist thermisch mit dem Verbindungskörper verbunden, wobei die Energiezelle mit einer zur ersten Zellenstirnseite gegenüberliegend angeordneten zweiten Zellenstirnseite an der zweiten Stirnseite des weiteren Verbindungskörpers anliegt und mit dem weiteren Verbindungskörper thermisch gekoppelt ist. Dadurch wird eine Wärmeabfuhr aus der Energiezelle an ihrer breiten Seite durch den Verbindungskörper sichergestellt und die Energiezelle gekühlt. Dadurch wird eine beidseitige Kühlung, im Idealfall, wenn die Energiezelle auf der Anlagefläche aufliegt, eine Kühlung der Energiezelle von drei Seiten her sichergestellt. Dadurch ist die Energiezelle besonders gut gekühlt.

In einer weiteren Ausführungsform füllt die Energiezelle im Wesentlichen vollständig den Zwischenraum aus. Alternativ sind in dem Zwischenraum in Querrichtung mehrere Energiezellen der Energiezellenanordnung angeordnet, wobei jede der Energiezellen mit der ersten Zellenstirnseite an der ersten Stirnseite und mit der zweiten Zellenstirnseite an der zweiten Stirnseite anliegt und thermisch mit dem Verbindungskörper und dem weiteren Verbindungskörper gekoppelt ist.

In einer weiteren Ausführungsform sind die Energiezelle und der Verbindungskörper miteinander verpresst. Dadurch kann die Energiezelle, vorzugsweise die Energiezellenanordnung, zusammen mit dem Verbindungskörper in einem Stapel vormontiert werden. Besonders einfach kann der elektrische Energiespeicher dadurch hergestellt werden, dass in einem Stapel abwechselnd ein Verbindungskörper und eine Energiezelle angeordnet werden, wobei jeweils ein erster Rippenabschnitt in einen zugeordneten Verbindungsabschnitt geschoben wird. Ferner wird in dem Herstellungsverfahren ein erster Rippenabschnitt des Kühlkörpers in jeweils einen zugeordneten Verbindungskörper geschoben.

In einem Verfahren zur Herstellung des elektrischen Energiespeichers werden abwechselnd ein Verbindungskörper eines Kühlkörpers und eine Energiezelle in einem Stapel angeordnet, wobei jeweils ein erster Rippenabschnitt in jeweils einen zugeordneten Verbindungskörper geschoben wird, wobei der Stapel in Längsrichtung verpresst wird.

Gegebenenfalls können die Verbindungskörper mit den Energiezellen auch stoffschlüssig, beispielsweise verklebt sein. Dadurch kann der Stapel vormontiert werden und erst in der Endmontage die jeweiligen Rippenabschnitte in den jeweils zugeordneten Verbindungskörper gesteckt werden. Dadurch kann auf zusätzliche Dichtmaßnahmen verzichtet werden und ein Aufschwellen der Energiezelle bei Belastung unterbunden werden.

Nachfolgend wird die Erfindung anhand von Figuren näher erläutert. Dabei zeigen:
- Figur 1: eine perspektivische Darstellung eines elektrischen Energiespeichers eines Fahrzeugs;
- Figur 2: eine perspektivische Darstellung eines Kühlkörpers des in Figur 1 gezeigten elektrischen Energiespeichers;
- Figur 3: eine Schnittansicht entlang einer in Figur 2 gezeigten Schnittebene A-A durch den in Figur 2 gezeigten Kühlkörper;
- Figur 4: eine Draufsicht auf einen Trägerabschnitt des in den Figuren 1 bis 3 gezeigten Kühlkörpers;
- Figur 5: eine weitere perspektivische Darstellung des in Figur 2 gezeigten Kühlkörpers;
- Figur 6: eine perspektivische Teildarstellung des in Figur 1 gezeigten elektrischen Energiespeichers,
- Figur 7: eine teilperspektivische Darstellung einer Energiezelle des in Figur 1 gezeigten elektrischen Energiespeichers.
- Figur 8: eine Schnittansicht entlang einer in Figur 1 gezeigten Schnittebene C-C durch den Kühlkörper;
- Figur 9: eine Schnittansicht entlang einer in Figur 1 gezeigten Schnittebene D-D durch den in Figur 1 gezeigten Kühlkörper des elektrischen Energiespeichers;
- Figur 10: eine Schnittansicht entlang einer in Figur 1 gezeigten Schnittebene E-E durch den in Figur 1 gezeigten elektrischen Energiespeicher;
- Figur 11: eine Schnittansicht entlang einer in Figur 1 gezeigten Schnittebene F-F durch den in Figur 1 gezeigten elektrischen Energiespeicher;
- Figur 12: eine Schnittansicht entlang einer in Figur 1 gezeigten Schnittebene G-G durch den in Figur 1 gezeigten elektrischen Energiespeicher;
- Figur 13: eine perspektivische Darstellung des Kühlkörpers des elektrischen Systems in einer Weiterbildung des in den Figuren 1 bis 12 gezeigten Kühlkörpers; und
- Figur 14: eine Schnittansicht entlang einer in Figur 13 gezeigten Schnittebene J-J durch den in Figur 13 gezeigten Kühlkörper.

In den nachfolgenden Figuren wird auf ein Koordinatensystem Bezug genommen. Das Koordinatensystem ist beispielhaft als Rechtssystem ausgebildet und weist eine x-Achse (Längsrichtung), eine y-Achse (Querrichtung) und eine z-Achse (Höhenrichtung) auf.

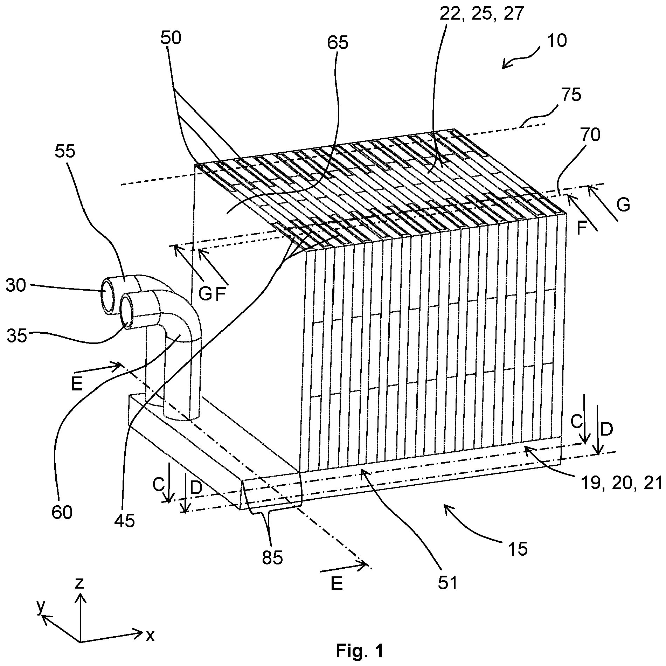

Figur 1 zeigt eine perspektivische Darstellung eines elektrischen Systems 5 eines Kraftfahrzeugs.

Das elektrische System 5 kann als elektrischer Energiespeicher 10 ausgebildet sein. Das elektrische System 5 wird anhand eines elektrischen Energiespeichers 10 erläutert. Das elektrische System 5 weist einen Kühlkörper 15 und eine Wärmequellenanordnung 19 auf. Die Wärmequelle 19 weist eine oder mehrere Wärmequellen 27 auf. Die Wärmequellenanordnung 19 kann beispielsweise eine Energiezellenanordnung 20 und/oder eine Leistungselektronik 21 aufweisen. Der elektrische Energiespeicher 10 ist in der Ausführungsform beispielhaft als Hochstrombatterie ausgebildet. Dabei dient der elektrische Energiespeicher 10 beispielsweise dazu, einen Antriebsmotor, vorzugsweise mehrere Antriebsmotoren eines Fahrzeugs, insbesondere eines zumindest teilweise elektrisch angetriebenen Kraftfahrzeugs, anzutreiben. Dabei wird unter einem Antriebsmotor der Motor verstanden, der zur Sicherstellung einer Fortbewegung des Kraftfahrzeugs dient.

Der elektrische Energiespeicher 10 kann auch als Speichermedium für elektrische Energie in einem Luftfahrzeug ausgebildet sein. Beispielsweise kann der elektrische Energiespeicher 10 ausgebildet sein, elektrische Energie zum Starten des Antriebsmotors oder eines Hilfsaggregats, beispielsweise einer Auxiliary Power Unit (APU), und/oder zum Betrieb von wenigstens einer sicherheitsrelevanten Komponente, beispielsweise einer Hydraulikpumpe und/oder eines Stellmotors, bereitzustellen.

Die Energiezellenanordnung 20 ist beispielhaft ausgebildet, elektrische Energie vorzugsweise dauerhaft über einen längeren Zeitraum, beispielsweise mehrere Tage und Wochen, zu speichern. Die Energiezellenanordnung 20 weist wenigstens eine, vorzugsweise mehrere in Reihe und/oder parallel geschaltete, als Wärmequelle 27 ausgebildete Energiezellen 25 auf. Auch kann die Energiezelle 25 als Supercap ausgebildet sein. Die Energiezelle 25 ist beispielhaft als Pouch-Zelle, insbesondere als Lithiumionenzelle ausgebildet. Die Energiezellenanordnung 20 ist beispielhaft ausgebildet, eine elektrische Leistung im Bereich von 20 bis 200 Kilowatt dauerhaft ohne technische Beschädigung bereitzustellen.

Zusätzlich oder alternativ zu der Energiezellenanordnung 20 kann das elektrische System 5 auch die Leistungselektronik 21, beispielsweise zur Ansteuerung eines elektrischen Antriebs des Fahrzeugs oder eine Ladelektronik zum Laden der Energiezellenanordnung 20, aufweisen. Die Leistungselektronik 21 und die Energiezellenanordnung 20 können gemeinsam an dem Kühlkörper 15 angeordnet sein.

Wenn das elektrische System 5 die Leistungselektronik 21 (zusätzlich oder anstatt der Energiezellenanordnung 20) aufweist, kann die Leistungselektronik 21 in mehreren Elektronikebenen 22 angeordnet sein, wobei die Elektronikebenen 22 beabstandet zueinander angeordnet sind und jeweils eine Wärmequelle 27 ausbilden. Die Elektronikebenen 22 können gekapselt ausgebildet und miteinander elektrisch (nicht in Figur 1 dargestellt) verbunden sein. Die Leistungselektronik 21 kann in einem ersten Teilbereich und die elektrische Energiezellenanordnung 20 in einem zweiten Teilbereich des Systems 5 angeordnet sein.

Um eine thermische Beschädigung der Leistungselektronik 21 und/oder der Energiezelle 25 zu verhindern, ist der Kühlkörper 15 vorgesehen. Der Kühlkörper 15 dient dazu, die die Leistungselektronik 21 und/oder die Energiezelle 25 zu kühlen.

Der Kühlkörper 15 kann beispielsweise fluidisch mittels eines ersten Fluidanschlusses 30 und eines zweiten Fluidanschlusses 35 mit einem Kühlkreislauf (in Figur 1 nicht dargestellt) angeschlossen sein. In dem Kühlkreislauf kann ein Kühlfluid 26, das beispielsweise in flüssigem und/oder gasförmigen Aggregatszustand vorliegt, zirkulieren. Das Kühlfluid 26 kann als Kühlflüssigkeit beispielsweise Wasser, Öl und/oder Additive aufweisen. Mittels des im Kühlkörper 15 geführten Kühlfluids 26 kann dabei Wärme aus der Energiezellenanordnung 20 in das Kühlfluid 26 geleitet werden und mittels des Kühlkreislaufs abgeführt werden. Dadurch wird die Energiezellenanordnung 20 gekühlt und eine thermische Überhitzung der Energiezellenanordnung 15 verhindert. Zusätzlich oder alternativ kann die Energiezellenanordnung 20 mittels des Kühlkreislaufes vorgewärmt und auf eine bestimmte Betriebstemperatur vorgeheizt werden.

Der Kühlkörper 15 weist beispielsweise einen Trägerabschnitt 40, wenigstens einen ersten Rippenabschnitt 45, wenigstens einen zweiten Rippenabschnitt 50, einen ersten Anschlusskanal 55, einen zweiten Anschlusskanal 60, einen Verbindungskörper 65 und wenigstens einen weiteren Verbindungskörper 66 auf.

Vorzugsweise weist der Kühlkörper 15 wenigstens einen, vorzugweise mehrere in einer ersten Reihe 70, die parallel zur x-Achse verläuft, beabstandet in x-Richtung zueinander angeordnete erste Rippenabschnitte 45 auf. In Querrichtung (y-Richtung) sind in der Ausführungsform in einer zweiten Reihe 75, die parallel zur ersten Reihe 70 angeordnet ist, wenigstens einer, vorzugsweise mehrere zweite Rippenabschnitt 50 angeordnet. Die zweiten Rippenabschnitte 50 sind in x-Richtung versetzt zueinander angeordnet. Der erste Rippenabschnitt 45 und der zweite Rippenabschnitt 50 sind parallel zueinander ausgerichtet. Jeweils ein erster Rippenabschnitt 45 und ein zweiter Rippenabschnitt 50 sind in einer gemeinsamen Ebene angeordnet.

Der Verbindungskörper 65 und der weitere Verbindungskörper 66 sind in Längsrichtung beabstandet zueinander angeordnet. Dabei sind in der Ausführungsform beispielhaft der Verbindungskörper 65 und der weitere Verbindungskörper 66 identisch zueinander ausgebildet. In der Ausführungsform sind zahlreiche Verbindungskörper 65, 66 vorgesehen. Dabei wird bei der weiteren Beschreibung des Kühlkörpers 15 unter dem weiteren Verbindungskörper 66 der Verbindungskörper 66 verstanden der nächstliegend zum Verbindungskörper 65 in x-Richtung angeordnet ist.

Zwischen jeweils dem Verbindungskörper 65 und dem weiteren Verbindungskörper 66 ist in Längsrichtung jeweils eine Energiezelle 25 der Energiezellenanordnung 20 angeordnet. In der Ausführungsform sind somit in einem Stapel 51 abwechselnd jeweils ein Verbindungskörper 65, 66 und eine Einzelzelle 25 beispielhaft angeordnet.

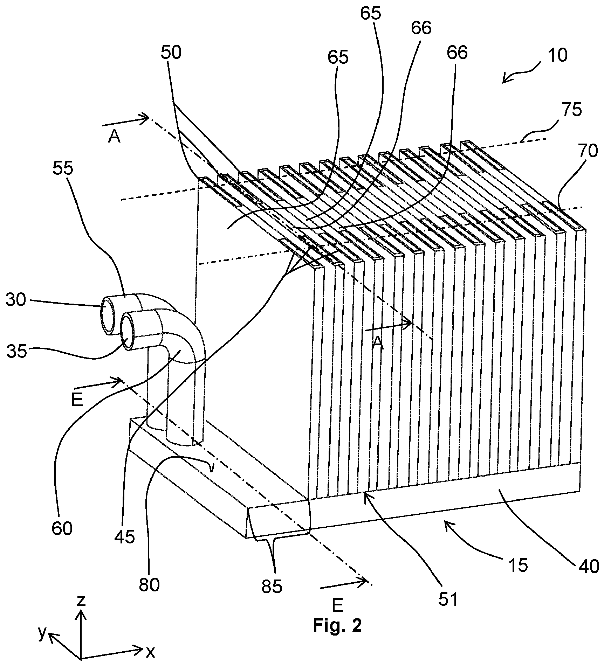

Figur 2 zeigt eine perspektivische Darstellung des in Figur 1 gezeigten Kühlkörpers 15.

Der Trägerabschnitt 40 ist als geschlossener Hohlkörper ausgebildet und weist oberseitig eine Anlagefläche 80 auf. Die Anlagefläche 80 ist plan ausgebildet und erstreckt sich in der Ausführungsform beispielhaft in einer xy-Ebene. In einem Teilbereich 85, der in Figur 2 beispielsweise linksseitig angeordnet ist, ist die Anlagefläche 80 oberseitig im Wesentlichen frei. In Querrichtung angrenzend an den Teilbereich 85 ist der erste Anschlusskanal 55 und benachbart in Querrichtung neben dem ersten Fluidanschluss 30 ist der zweite Anschlusskanal 60 angeordnet.

Der erste Anschlusskanal 55 weist den ersten Fluidanschluss 30 und der zweite Anschlusskanal 60 weist einen zweiten Fluidanschluss 35 auf, wobei der erste Fluidanschluss 30 und der zweite Fluidanschluss 35 in Höhenrichtung beabstandet zu der Anlagefläche 80 angeordnet sind. Dadurch sind der erste und zweite Fluidanschluss 30, 35 zur verbesserten Montierbarkeit beabstandet zu dem ersten und zweiten Rippenabschnitt 45, 50 und der Energiezellenanordnung 20 angeordnet. Der erste Anschlusskanal 55 und der zweite Anschlusskanal 60 sind beispielhaft L-förmig ausgebildet, wobei der erste und/oder der zweite Fluidanschluss 30, 35 auf einer zur Energiezellenanordnung 20 abgewandten Seite angeordnet ist.

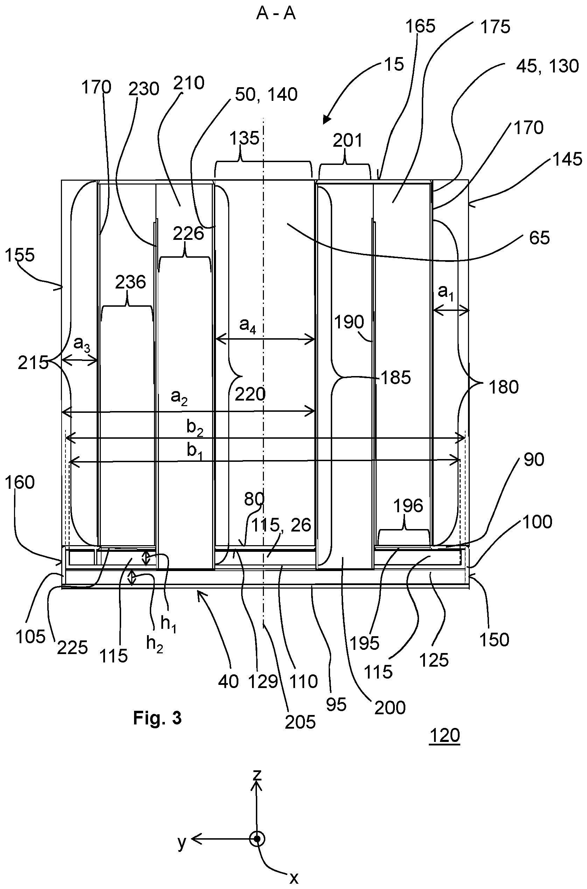

Figur 3 zeigt eine Schnittansicht entlang einer in Figur 2 gezeigten Schnittebene A-A durch den in Figur 2 gezeigten Kühlkörper 15.

Der Trägerabschnitt 40 weist einen oberseitig in Figur 3 angeordneten ersten Plattenabschnitt 90, einen unterseitig angeordneten zweiten Plattenabschnitt 95, eine erste Seitenwand 100, eine zweite Seitenwand 105 und einen Zwischensteg 110 auf. Der Trägerabschnitt 40 ist beispielsweise aus einem dünnwandigen Material gefertigt.

Der erste Plattenabschnitt 90 ist plattenförmig ausgebildet und erstreckt sich zumindest abschnittsweise in einer xy-Ebene. Oberseitig an dem ersten Plattenabschnitt 90 ist die Anlagefläche 80 angeordnet. In Querrichtung (x-Richtung) ist an einer jeweiligen Querseite des ersten Plattenabschnitts 90 die erste Seitenwand 100 und in Querrichtung gegenüberliegend die zweite Seitenwand 105 angeordnet. Die erste Seitenwand 100 und die zweite Seitenwand 105 sind beispielsweise plattenförmig ausgebildet und sind geneigt, vorzugsweise senkrecht, zum ersten Plattenabschnitt 90 angeordnet. Dabei erstrecken sich die erste Seitenwand 100 und die zweite Seitenwand 105 jeweils in Querrichtung versetzt angeordneten xz-Ebenen. Unterseitig ist der zweite Plattenabschnitt 95 angeordnet.

Der zweite Plattenabschnitt 95 ist ebenso plattenförmig oder kastenförmig ausgebildet. Der zweite Plattenabschnitt 95 verläuft parallel zum ersten Plattenabschnitt 90. Der erste und zweite Plattenabschnitt 90, 95 erstrecken sich in Querrichtung zwischen der ersten Seitenwand 100 und der zweiten Seitenwand 105.

Das Material kann dabei beispielsweise mittels eines Stanz-Biege-Verfahrens, eines Prägeverfahrens und/oder eines Tiefziehverfahrens geformt werden. Das Material kann eine Wandstärke von 0,5 bis 2 mm aufweisen. Zur Herstellung des Trägerabschnitts 40 kann der erste Plattenabschnitt 90 einstückig und materialeinheitlich zusammen mit der ersten und zweiten Seitenwand 100, 105 U-förmig ausgebildet sein.

Der zweite Plattenabschnitt 95 kann plattenförmig ausgebildet sein. Zusätzlich ist von Vorteil, wenn der Trägerabschnitt 40 nach Zusammensetzen der Einzelteile zur Ausbildung des Trägerabschnitts 40 dichtgeschweißt wird. Alternativ wäre auch ein Abdichten mittels Dichtmasse und/oder ein Dichtlöten denkbar. Auch das Vorsehen von wenigstens einem Dichtelement, beispielsweise einer Flächendichtung, wäre möglich.

In Höhenrichtung zwischen dem ersten Plattenabschnitt 90 und dem zweiten Plattenabschnitt 95 ist der Zwischensteg 110 angeordnet. Der Zwischensteg 110 ist beispielsweise in der Ausführungsform auf halber Höhe zwischen dem ersten Plattenabschnitt 90 und dem zweiten Plattenabschnitt 95 angeordnet. Der Zwischensteg 110 ist plattenförmig ausgebildet. Dabei erstreckt sich in Querrichtung der Zwischensteg 110 zwischen der ersten Seitenwand 100 und der zweiten Seitenwand 105.

Zusätzlich kann am Zwischensteg 110 seitlich wenigstens eine Haltelasche 111, 112 angeordnet sein, die sich parallel zur Seitenwand 100, 105 erstreckt und innenseitig an der jeweiligen Seitenwand 100, 105 anliegt. Von besonderem Vorteil ist, wenn beidseitig des Zwischenstegs 110 die Haltelaschen 111, 112 vorgesehen sind, um durch ein innenseitiges Anliegen an dem ersten Plattenabschnitt 90 einen Abstand des Zwischenstegs 110 zu dem ersten Plattenabschnitt 90 festzulegen.

Der erste Plattenabschnitt 90, die erste und zweite Seitenwand 100, 105 und der Zwischensteg 110 begrenzen zusammen einen ersten Kanal 115. Damit erstreckt sich der erste Kanal 115 parallel zu der Anlagefläche 80. Durch den gedichteten Trägerabschnitt 40 ist der erste Kanal 115 fluiddicht gegenüber einer Umgebung 120, insbesondere gegenüber der Energiezellenanordnung 20 und/oder der Leistungselektronik, ausgebildet. In dem ersten Kanal 115 wird das Kühlfluid 26 in eine erste Richtung geführt, die beispielsweise in der Ausführungsform entgegen der x-Richtung verläuft.

Der erste Kanal 115 weist im Wesentlichen einen rechteckförmigen Querschnitt auf. Der erste Kanal 115 erstreckt sich im Wesentlichen über eine gesamte erste maximale Innenbreite b₁ (in y-Richtung) des Trägerabschnitts 40 zwischen der ersten Seitenwand 100 und der zweiten Seitenwand 105. Dabei weist vorzugsweise der erste Kanal 115 ein Verhältnis der maximalen Innenbreite b₁ zu einer ersten maximalen Innenhöhe h₁ von 1 zu 5 bis 1 zu 30, insbesondere von 1 zu 7 bis 1 zu 15, auf.

Der erste Kanal 115 erstreckt sich in Längsrichtung im Wesentlichen über die gesamte Längserstreckung des Trägerabschnitts 40. Der erste Anschlusskanal 55 mündet an dem ersten Kanal 115 auf einer zum ersten Fluidanschluss 30 abgewandten Seite.

Der Zwischensteg 110 begrenzt auf einer zum ersten Kanal 115 in Höhenrichtung gegenüberliegenden Seite einen zweiten Kanal 125. Der zweite Kanal 125 wird unterseitig durch den zweiten Plattenabschnitt 95 und seitlich in Querrichtung durch die erste und zweite Seitenwand 100, 105 begrenzt. Der zweite Kanal 125 verläuft parallel zu der Anlagefläche 80.

Der zweite Kanal 125 weist eine zweite maximale Innenhöhe h₂ auf, die vorteilhafterweise identisch zu der ersten Innenhöhe h₁ ist. Der zweite Kanal 125 erstreckt sich identisch wie der erste Kanal 115 zwischen der ersten Seitenwand 100 und der zweiten Seitenwand 105 über eine gesamte zweite Innenbreite b₂ des Trägerabschnitts 40, sodass ebenso der zweite Kanal 125 ein Seitenverhältnis von der zweiten Innenhöhe h₂ zu der zweiten Innenbreite b₂ von 1 zu 5 bis 1 zu 20, insbesondere von 1 zu 7 bis 1 zu 15, aufweist.

Durch die parallele Anordnung des ersten Plattenabschnitts 90 zu dem zweiten Plattenabschnitt 95 und dem Zwischensteg 110 weist im Wesentlichen der erste Kanal 115 zu dem zweiten Kanal 125 eine identische Querschnittsfläche in einem Bereich in Längsrichtung zwischen zwei ersten und/oder zweiten Rippenabschnitten 45, 50 auf. Von besonderem Vorteil ist hierbei, wenn eine erste Querschnittsfläche des ersten Kanals 115 und/oder eine zweite Querschnittsfläche des zweiten Kanals 125 wenigstens 40 Prozent, vorzugsweise 45 Prozent, einer Gesamtquerschnittsfläche des Trägerabschnitts 40 und kleiner 48 Prozent der Gesamtquerschnittsfläche (mit einer yz-Ebene als Schnittebene) des Trägerabschnitts 40 beträgt.

Der erste Kanal 115 ist zu dem zweiten Kanal 125 in einer Richtung senkrecht zu der Anlagefläche 80, die der z-Richtung entspricht, überdeckend, insbesondere, wie in Figur 3 gezeigt, (im Wesentlichen) vollständig überdeckend angeordnet. Dabei wird unter einer Überdeckung verstanden, dass bei einer Projektion in einer Richtung senkrecht zu der Anlagefläche 80, also in z-Richtung in eine Projektionsebene, die als xy-Ebene ausgebildet ist und in der beispielsweise die Anlagefläche 80 angeordnet ist, sich in der Projektionsebene der erste Kanal 115 und der zweite Kanal 125 überlappen, vorzugsweise vollständig überlappen.

Der erste und zweite Rippenabschnitt 45, 50 sind geneigt, vorzugsweise senkrecht zu der Anlagefläche 80 ausgerichtet. Dabei sind der erste und zweite Rippenabschnitt 45, 50 in Querrichtung beabstandet zueinander angeordnet. Der Verbindungskörper 65 liegt unterseitig mit einer Unterseite 129 auf der Anlagefläche 80 auf und ist plattenförmig ausgebildet. Dabei kann der Verbindungskörper 65 über die Unterseite 129 thermisch mit der Anlagefläche 80 verbunden sein.

Der Verbindungskörper 65 weist ein thermisch leitfähiges Material, insbesondere Aluminium auf. Der Verbindungskörper weist vorzugsweise ein Material mit einem Wärmeleitkoeffizenten von 160 W/(m*K) bis 240 W/(m*K) auf. Der Verbindungskörper weist als Haupterstreckungsrichtungen die y-Richtung und die z-Richtung auf. In x-Richtung ist der Verbindungskörper 65 deutlich schlanker/dünner als in y-Richtung und/oder in z-Richtung ausgebildet.

Der Verbindungskörper 65 weist eine erste Aufnahme 130 und eine zweite Aufnahme 140 auf. Die erste Aufnahme 130 ist innenseitig korrespondierend zu einer äußeren Ausgestaltung des ersten Rippenabschnitts 45 ausgebildet. Die zweite Aufnahme 140 ist innenseitig korrespondierend zu einer äußeren Ausgestaltung des zweiten Rippenabschnitts 50 ausgebildet. In Höhenrichtung kann sich die erste Aufnahme 130 und/oder die zweite Aufnahme 140 vollständig zwischen der Unterseite 129 und einer Oberseite 165 des Verbindungskörpers 65 erstrecken. Dabei kann die erste Aufnahme 130 und/oder die zweite Aufnahme 140 in der Oberseite 165 münden, sodass die erste Aufnahme 130 und/oder die zweite Aufnahme 130 als Durchgangsöffnung ausgebildet ist. Auch kann die erste Aufnahme 130 und/oder die zweite Aufnahme 140 oberseitig verschlossen sein. An der Oberseite 165 des Verbindungskörpers 65 schließen beispielhaft sowohl der erste Rippenabschnitt 45 als auch der zweite Rippenabschnitt 50 auf gleicher Höhe mit der Oberseite 165 ab.

Die erste Aufnahme 130 und die zweite Aufnahme 140 sind in Querrichtung durch einen Zwischenbereich 135 räumlich voneinander getrennt. Der Zwischenbereich 135 ist in der Ausführungsform aus einem Vollmaterial ausgebildet. In montiertem Zustand des Kühlkörpers 15 greift der erste Rippenabschnitt 45 in die erste Aufnahme 130 und der zweite Rippenabschnitt 50 in die zweite Aufnahme 140 ein.

Die erste Aufnahme 130 ist ferner in Querrichtung beabstandet zu einer ersten Seitenfläche 145 des Verbindungskörpers angeordnet. Die erste Seitenfläche 145 ist plan ausgebildet und erstreckt sich in einer xz-Ebene. Die erste Seitenfläche 145 und eine zweite Seitenfläche 150, die außenseitig angeordnet sind, sind plan ausgebildet und in einer gemeinsamen xz-Ebene angeordnet.

In der Aufnahme 130, 140 kann zusätzlich ein Wärmeleitmaterial 170 vorgesehen sein. Das Wärmeleitmaterial 170 kann beispielsweise pastös ausgebildet sein und beispielsweise auf Silberbasis sein. Das Wärmeleitmaterial 170 verbindet dabei thermisch den ersten und zweiten Rippenabschnitt 45, 50 mit dem Verbindungskörper 65 und sorgt für einen guten thermischen Übergang zwischen dem Verbindungskörper 65 und den Rippenabschnitten 45, 50. Mittels des Wärmeleitmaterials 170 wird ferner ein Toleranzspiel zwischen der umfangsseitigen Ausgestaltung des Rippenabschnitts 45, 50 und der innenseitigen Ausgestaltung der ersten und zweiten Aufnahme 130, 140 ausgeglichen. Dadurch kann der Verbindungskörper 65 in der Montage des Kühlkörpers 15 besonders leicht von oben in entgegengesetzter z-Richtung auf den ersten und zweiten Rippenabschnitt 45, 50 gesteckt werden.

Eine dritte Seitenfläche 155 des Verbindungskörpers 65, die in Querrichtung gegenüberliegend zur ersten Seitenfläche 145 angeordnet ist, sowie eine vierte Seitenfläche 160 der zweiten Seitenwand 105, die außenseitig an der zweiten Seitenwand 105 angeordnet sind, erstrecken sich in einer gemeinsamen xz-Ebene beispielhaft. Dabei sind in der Ausführungsform die erste Seitenfläche 145 und die dritte Seitenfläche 155 jeweils eine kurze Seite des Verbindungskörpers 65.

Der erste Rippenabschnitt 45 begrenzt innenseitig einen ersten Kühlkanal 175. Um eine besonders große Querschnittsfläche für den ersten Kühlkanal 175 bereitzustellen, ist der erste Rippenabschnitt 45 aus einem dünnwandigen, thermisch leitfähigen Material, beispielsweise aus einem dünnwandigen Blechmaterial, hergestellt. Der erste Kühlkanal 175 weist einen ersten Kanalabschnitt 180 und einen zweiten Kanalabschnitt 185 auf. Der erste Kanalabschnitt 180 und der zweite Kanalabschnitt 185 sind durch eine erste Trennwand 190, die sich in einer xz-Ebene erstreckt, über weite Teile der Erstreckung des ersten Rippenabschnitts 45 in Höhenrichtung voneinander fluidisch getrennt. Der erste Kanalabschnitt 180 und der zweite Kanalabschnitt 185 sind fluidisch miteinander unterhalb der Oberseite 165 miteinander verbunden. Dies führt dazu, dass der erste Kühlkanal 175 im Wesentlichen U-förmig in dem ersten Rippenabschnitt 45 geführt ist. Dabei ist der erste Kanalabschnitt 180 auf einer zur ersten Seitenfläche 145 zugewandten Seite und der zweite Kanalabschnitt 185 auf einer zur ersten Seitenfläche 145 abgewandten Seite des ersten Rippenabschnitts 45 angeordnet.

Auch der weitere Verbindungskörper 66 weist durch die identische Ausgestaltung zu dem Verbindungskörper 65 die erste Seitenfläche 145 und die dritte Seitenfläche 155 auf, wobei die erste Seitenfläche 145 des Verbindungskörpers 65 und die erste Seitenfläche 145 des Weiteren Verbindungskörpers 66 in der gemeinsamen xz-Ebene angeordnet sind, in der auch die zweite Seitenfläche 150 der ersten Seitenwand 100 angeordnet ist. Ebenso ist die dritte Seitenfläche 155 des Weiteren Verbindungskörpers 66 in der gleichen xz-Ebene angeordnet, in der auch die dritte Seitenfläche 155 des Verbindungskörpers 65 sowie die vierte Seitenfläche 160 angeordnet sind. Analog dazu greift ein weiterer erste Rippenabschnitt 45 in die erste Aufnahme 130 des Weiteren Verbindungskörpers 66 und ein weiterer zweiter Rippenabschnitt 50 in die zweite Aufnahme 140 des weiteren Verbindungskörpers 66 ein, wobei ebenso der weitere erste Rippenabschnitt 45 und der weitere zweite Rippenabschnitt 50 thermisch mit dem weiteren Verbindungskörper 66 vorzugsweise mittels Wärmeleitmittel 170 gekoppelt sind.

In dem ersten Plattenabschnitt 90 ist eine erste Öffnung 195, die als Durchgangsöffnung ausgebildet ist, angeordnet. Die erste Öffnung 195 ist schlitzförmig ausgebildet. An einem ersten Teilabschnitt 196 der ersten Öffnung 195 mündet der erste Kanalabschnitt 180 mit einem ersten Zulauf und ist fluidisch mit dem ersten Kanal 115 verbunden. Der erste Zulauf ist auf einer zum Verbindungskörper 65 abgewandten Seite des ersten Rippenabschnitts 45 angeordnet.

In dem Zwischensteg 110 ist eine zweite Öffnung 200 angeordnet, die in der Unteransicht eine rechteckförmige Ausgestaltung aufweist. Einen zweiten Teilabschnitt 201 der ersten Öffnung 195 und den ersten Kanal 115 durchgreift der erste Rippenabschnitt 45. Unterseitig mündet der zweite Kanalabschnitt 190 an der zweiten Öffnung 200, die einen ersten Rücklauf ausbildet. Der erste Rücklauf ist fluidisch mit dem zweiten Kanal 125 verbunden.

Der zweite Rippenabschnitt 50 kann spiegelsymmetrisch bezogen auf eine Symmetrieebene 205, die als xz-Ebene ausgebildet ist und mittig zwischen der ersten Seitenfläche 145 und der dritten Seitenfläche 155 angeordnet ist, ausgebildet sein. Dabei weist beispielhaft der zweite Rippenabschnitt 50 einen zweiten Kühlkanal 210 auf, wobei der zweite Kühlkanal 210 U-förmig in dem zweiten Rippenabschnitt 50 verläuft. Auch der zweite Rippenabschnitt 50 ist aus dünnwandigem Material, vorzugsweise Blech, gefertigt und dichtet fluiddicht den zweiten Kühlkanal 210 gegenüber der Umgebung 120 ab.

Der zweite Kühlkanal 210 weist einen dritten Kanalabschnitt 215 und einen vierten Kanalabschnitt 220 auf. Der dritte Kanalabschnitt 215 ist in Höhenrichtung kürzer ausgebildet und ist in Querrichtung auf der zur dritten Seitenfläche 155 zugewandten Seite angeordnet. Der vierte Kanalabschnitt 220 ist auf einer zur dritten Seitenfläche 155 abgewandten Seite und somit auf der zum ersten Rippenabschnitt 45 zugewandten Seite in Querrichtung angeordnet. Der vierte Kanalabschnitt 220 ist beispielhaft in Höhenrichtung länger ausgebildet als der dritte Kanalabschnitt 215. Oberseitig im ersten Kühlkanal 175 bzw. unterhalb der Oberseite 165 ist der dritte Kanalabschnitt 215 mit dem vierten Kanalabschnitt 220 fluidisch verbunden. In Querrichtung werden der dritte und vierte Kanalabschnitt 215, 220 durch eine zweite Trennwand 230 fluidisch voneinander getrennt. Die zweite Trennwand 230 verläuft beispielsweise in einer xz-Ebene.

Die ersten Rippenabschnitte 45 sind untereinander identisch ausgebildet und begrenzen somit jeweils den mit Kühlfluid 26 füllbaren ersten Kühlkanal 175. Die zweiten Rippenabschnitte 50 sind identisch untereinander ausgebildet und begrenzen jeweils innenseitig den zweiten Kühlkanal 210, der mit dem Kühlfluid 26 durchströmbar ist. Von besonderem Vorteil ist, wenn der erste Rippenabschnitt 45 und der zweite Rippenabschnitt 50 identisch zueinander ausgebildet sind, und nur um 180° verdreht zueinander angeordnet sind. Dadurch kann eine Teilevielfalt zur Herstellung des Kühlkörpers 15 geringgehalten werden.

In dem ersten Plattenabschnitt 90 ist eine dritte Öffnung 225 angeordnet. Die dritte Öffnung 225 ist schlitzförmig ausgebildet. Der dritte Kanalabschnitt 215 mündet unterseitig in der dritten Öffnung 225 in einem dritten Teilbereich 226 und bildet einen zweiten Zulauf aus. In dem Zwischensteg 110 ist ferner eine vierte Öffnung 235 vorgesehen, wobei die vierte Öffnung 235 eine gleiche Querschnittsfläche aufweist wie die zweite Öffnung 200. Der zweite Rippenabschnitt 50 durchgreift in einem vierten Teilbereich 236 die dritte Öffnung 225 und mündet in der vierten Öffnung 235 und bildet einen zweiten Rücklauf aus. Der zweite Rippenabschnitt 50 durchgreift den ersten Kanal 115 fluiddicht. Die vierte Öffnung 235 verbindet fluidisch den zweiten Kanal 125 mit dem vierten Kanalabschnitt 220. Die vierte Öffnung 235 kann in einer Draufsicht rechteckförmig ausgebildet sein.

In der Ausführungsform sind der erste Rippenabschnitt 45 und der zweite Rippenabschnitt 50 außermittig angeordnet. Insbesondere ist auch der erste Rippenabschnitt 45 außermittig zu einem ersten Teilabschnitt 141 des Verbindungskörpers 65, 66 und der zweite Rippenabschnitt 50 außermittig zu einem zweiten Teilabschnitt 142 des Verbindungskörpers 65, 66 angeordnet. Dabei erstreckt sich der erste Teilabschnitt 141 zwischen einer Mitte 143 des Verbindungskörpers 65, 66 und der ersten Seitenfläche 145 und der zweite Teilabschnitt 142 direkt angrenzend an den ersten Teilabschnitt 141 und somit der Mitte 143 und der dritten Seitenfläche 155. Der erste und zweite Teilabschnitt 141, 142 sind dabei in Querrichtung gleich breit ausgebildet.

Der erste Rippenabschnitt 45 weist beispielhaft einen minimalen ersten Abstand a₁ zu der ersten Seitenfläche 145 auf. Ferner weist der erste Rippenabschnitt 45 einen zweiten minimalen Abstand a₂ zu der dritten Seitenfläche 155 auf, wobei der zweite Abstand a₂ unterschiedlich zum ersten Abstand a₁, vorzugsweise deutlich größer als der erste Abstand a₁ ist. Von besonderem Vorteil ist, wenn der erste Abstand a₁ kleiner einer Hälfte des zweiten Abstands a₂ ist. Dadurch ist in der Ausführungsform beispielhaft der erste Rippenabschnitt 45 näher an der ersten Seitenfläche 145 als zur Mitte 143 angeordnet.

Der zweite Rippenabschnitt 50 weist einen dritten minimalen Abstand a₃ zu der dritten Seitenfläche 155 und einen vierten minimalen Abstand a₄ zu dem ersten Rippenabschnitt 45 auf. Der vierte minimale Abstand a₄ ist größer, vorzugsweise wenigstens doppelt so groß wie der dritte minimale Abstand a₃. Von besonderem Vorteil ist, wie in Figur 3 gezeigt, dass der erste minimale Abstand a₁ gleich dem dritten minimalen Abstand a₃ ist. Auch wäre es denkbar, dass der dritte minimale Abstand a₃ kleiner als der erste minimale Abstand a₁ und/oder als der zweite minimale Abstand a₂ ist. Dadurch ist der zweite Rippenabschnitt 50 näher zur dritten Seitenfläche 155 als zur Mitte 143 angeordnet.

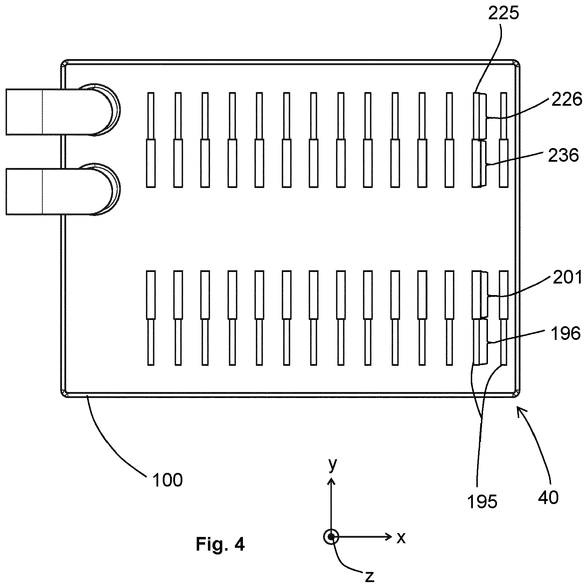

Figur 4 zeigt eine Draufsicht auf den Trägerabschnitt 40.

In Längsrichtung sind der erste Teilbereich 196 und dritte Teilbereich 226 schmaler ausgebildet als der zweite Teilbereich 201 und der vierte Teilbereich 236. Der erste Teilbereich 196 und somit der erste Zulauf ist auf der zur ersten Seitenwand 100 zugewandten Seite der ersten Öffnung 195 und der zweite Teilbereich 201 und somit der erste Rücklauf ist auf einer der ersten Seitenwand 100 abgewandten Seite angeordnet. Ebenso ist der dritte Teilbereich 226 und somit der zweite Zulauf auf der zur zweiten Seitenwand 105 zugewandten Seite der zweiten Öffnung 225 und der vierte Teilbereich 236 und somit der zweite Rücklauf auf einer der ersten Seitenwand 100 zugewandten Seite angeordnet. Der zweite und vierte Teilbereich 201, 236 sind vorzugsweise um eine doppelte Wandstärke des ersten und zweiten Rippenabschnitts 45, 50 breiter als der erste und dritte Teilbereich 196, 226 ausgebildet.

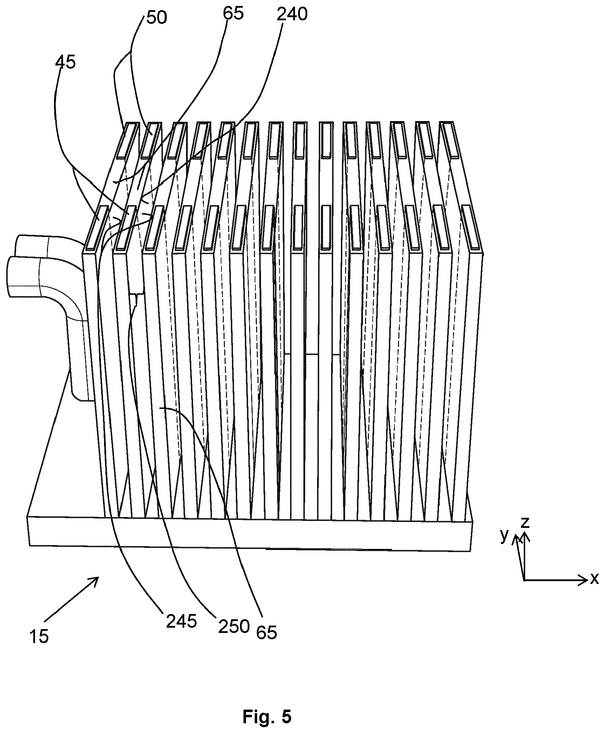

Figur 5 zeigt eine perspektivische Darstellung des in den Figuren 1 bis 3 gezeigten Kühlkörpers 15.

Der Verbindungskörper 65 und der weitere Verbindungskörper 66 weisen jeweils stirnseitig eine erste Stirnseite 240 auf. Die erste Stirnseite 240 ist plan ausgebildet und erstreckt sich stirnseitig im Wesentlichen vollständig über die gesamte Erstreckung des Verbindungskörpers 65, 66. Dabei erstreckt sich die erste Stirnseite 240 in einer yz-Ebene. Jeder der Verbindungskörper 65, 66 weist ferner eine zweite Stirnseite 245 auf.

Die zweite Stirnseite des nächstliegenden, weiteren Verbindungskörpers 66 ist in x-Richtung gegenüberliegend zur ersten Stirnseite 240 des Verbindungskörpers angeordnet. Die zweite Stirnseite 245 ist ebenso plan ausgebildet und erstreckt sich in einer weiteren yz-Ebene und ist somit parallel zur ersten Stirnseite 240 ausgerichtet. Dabei erstreckt sich die zweite Stirnseite 245 plan im Wesentlichen vollständig über den Verbindungskörper 65, 66. Die Stirnseiten 240, 245 schließen sich seitlich direkt an die erste und dritte Seitenfläche 145, 155 an.

Zwei in y-Richtung benachbart zueinander angeordnete und in Figur 5 nebeneinander dargestellte Verbindungskörper 65 begrenzen zusammen mit der ersten Stirnseite 240 des Verbindungskörpers 65 und der zweiten Stirnseite 245 des nächstliegenden Verbindungskörpers 65 jeweils einen Zwischenraum 250. Der Zwischenraum 250 ist nutförmig ausgebildet.

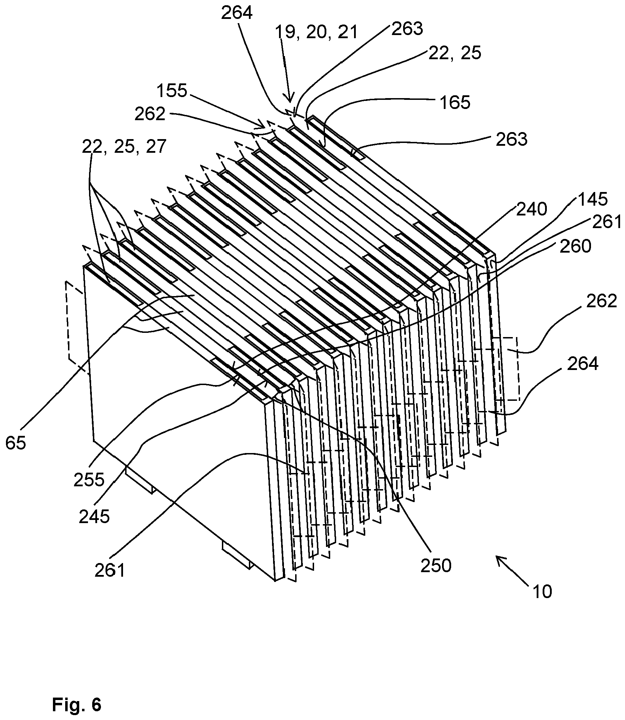

Figur 6 zeigt eine perspektivische Teildarstellung des in Figur 1 gezeigten elektrischen Energiespeichers 10.

In dem Zwischenraum 250 ist jeweils vorzugsweise ausschließlich eine einzige Wärmequelle 27 (die Energiezelle 25 der Energiezellenanordnung 20 und/oder eine Elektronikebene 27) der Leistungselektronik 21 angeordnet. Selbstverständlich wäre es auch denkbar, dass Wärmequellen 27 insbesondere mehrere Energiezellen 25 und/oder mehrere Elektronikebenen 22 der Leistungselektronik 21 in jeweils einem Zwischenraum 250 angeordnet sind. In diesem Fall wäre es jedoch besonders günstig, wenn die Wärmequellen 27 in Querrichtung (y-Richtung) nebeneinander angeordnet sind, sodass jede Wärmequelle Kontakt zu der ersten und zweiten Stirnseite 240, 245 aufweist.

Die Wärmequelle 27 (die Energiezelle 25 und/oder die Elektronikebene 22 der Leistungselektronik 21) erstreckt sich in Höhenrichtung zwischen der Anlagefläche 80 und der Oberseite 165 und weist im Wesentlichen die gleiche Erstreckung in Höhenrichtung auf wie der Verbindungskörper 65, 66. Dabei ragt in der Ausführungsform die Energiezelle 25 nicht über die Oberseite 165 hinaus, sondern schließt bündig mit der Oberseite 165 ab.

Die Wärmequelle 27 (die Energiezelle 25 und/oder die Elektronikebene 22 der Leistungselektronik 21) liegt mit einer ersten Zellenstirnseite 255 an der ersten Stirnseite 240 des Verbindungskörpers 65 an. Mit einer zur ersten Zellenstirnseite 255 gegenüberliegend angeordneten zweiten Zellenstirnseite 260 liegt die Wärmequelle 27 an der zweiten Stirnseite 245 des zum Verbindungskörper 65, 66 nächstliegend angeordneten nächsten weiteren Verbindungskörpers 66 an. An der ersten Zellenstirnseite 255 und der zweiten Zellenstirnseite 260 ist die Wärmequelle 27 thermisch mit zwei nächstliegend angeordneten und den Zwischenraum 250 begrenzenden Verbindungskörpern 65 gekoppelt. Vorzugsweise ist die Energiezelle 25 in dem Zwischenraum 250 verpresst angeordnet. Dadurch kann auf die Anordnung eines zusätzlichen Wärmeleitmaterials, insbesondere auf eine Wärmeleitpaste, zwischen der ersten Zellenstirnseite 255 und der ersten Stirnseite 240 sowie der zweiten Zellenstirnseite 260 und der zweiten Stirnseite 245 verzichtet werden. Ferner verfüllt die Wärmequelle 27 im Wesentlichen vollständig den Zwischenraum 250. Ferner wird durch die Verpressung ein Aufblähen der Energiezelle 25, die in der Ausführungsform beispielhaft als Pouch-Zelle ausgebildet ist, im Betrieb der Energiezellenanordnung 20 vermieden. Wird mittels des Kühlkörpers 15 die Leistungselektronik 21 gekühlt, wird im Betrieb der Leistungselektronik 21 eine Überhitzung von Komponenten der Leistungselektronik 21, beispielsweise von MOSFETs, vermieden.

An einer fünften Seitenfläche 261 weist die Energiezelle 25 eine erste Anschlusselektrode 262 auf. An einer zur fünften Seitenfläche 262 gegenüberliegenden sechsten Seitenfläche 263 weist die Energiezelle 25 eine zweite Anschlusselektrode 264 auf. In der Ausführungsform ragt seitlich die fünfte Seitenfläche 261 über die erste Seitenfläche 145 heraus. Durch die beispielhafte Ausgestaltung der Energiezelle 25 als Pouch-Zelle weist die Energiezelle 25 im Wesentlichen eine taschenartige Ausgestaltung auf, wobei seitlich über die erste Seitenfläche 145 die fünfte Seitenfläche 261 beispielhaft spitz zulaufend über die erste Seitenfläche 145 hervorragt. Ebenso ragt seitlich die sechste Seitenfläche 264 und die an der sechsten Seitenfläche 264 angeordnete zweite Anschlusselektrode 264 über die dritte Seitenfläche 155 des Verbindungskörpers 65 hervor.

In Höhenrichtung kann sich die erste und/oder zweite Anschlusselektrode 262, 264 nur über einen Teilbereich einer Gesamterstreckung der Energiezelle 25 in Höhenrichtung erstrecken und ist beispielhaft in der Ausführungsform beabstandet in Höhenrichtung zwischen der Anlagefläche 80 und der Oberseite 165 angeordnet.

Bei einer Verschaltung der elektrischen Energiezellen 25 in Reihenschaltung können die Energiezellen 25 in der Energiezellenanordnung 20 abwechselnd um 180° verdreht angeordnet sein, sodass in einer dritten Reihe abwechselnd über die erste Seitenfläche 145 die erste Anschlusselektrode 262 und die zweite Anschlusselektrode 264 hervorragen. Ferner ragen abwechselnd über die dritte Seitenfläche 155 die erste Anschlusselektrode 262 und die zweite Anschlusselektrode 264 hervor. Dabei ist jeweils die erste Anschlusselektrode 262 mit der nächstliegenden zweiten Anschlusselektrode 264 in Reihenschaltung elektrisch verbunden.

Alternativ ist auch denkbar, dass die Energiezellen 25 alle identisch in einem Stapel zwischen den Verbindungskörpern 65 angeordnet sind, sodass an der ersten Seitenfläche 145 nur die ersten Anschlusselektroden 261 über die erste Seitenfläche 145 hervorragen und an der dritten Seitenfläche 155 nur die zweiten Anschlusselektroden 264 über die dritte Seitenfläche 155 hervorragen. Die ersten Anschlusselektroden 262 können alle miteinander mittels einer Anschlussbrücke verbunden sein und ebenso können die zweiten Anschlusselektroden 264 mittels einer weiteren Anschlussbrücke miteinander verbunden sein, sodass die Energiezellen 25 parallelgeschaltet sind.

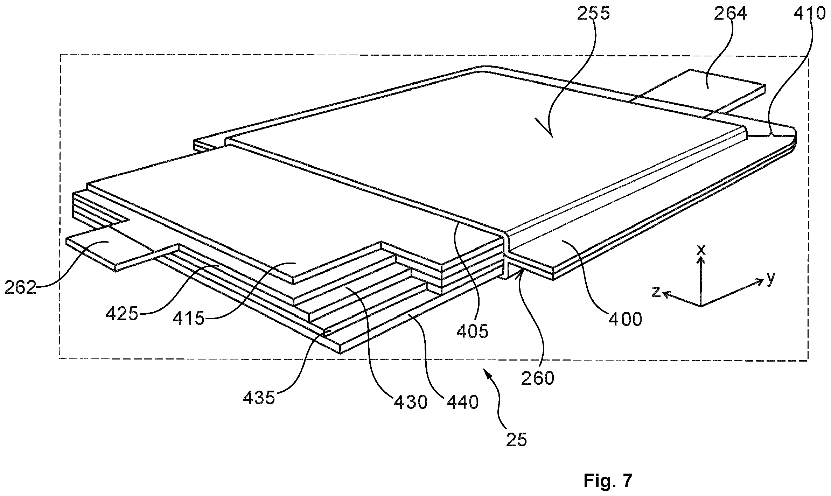

Figur 7 zeigt eine perspektivische Darstellung der Energiezellenanordnung 20 in teilgeschnittenem Zustand.

Die Energiezelle 25 ist als Lithium-Ionenakku aufgebaut und weist ein Gehäuse 400 auf, das in der Ausführungsform folienartig als Beutel ausgebildet ist. Auch eine andere Ausgestaltung des Gehäuses 400 ist denkbar. Das Gehäuse 400 weist außenseitig die erste Zellenstirnseite 255 (in Figur 7 oberseitig angeordnet) und in Figur 7 beispielhaft unterseitig angeordnet die zweite Zellenstirnseite 260 auf. Zusätzlich kann durch die beutelartige Ausgestaltung des Gehäuses 400 das Gehäuse 400 einen Rand 410 aufweisen, wobei der Rand 410 dünner ausgebildet ist und somit zurückversetzt zu der ersten und der zweiten Zellenstirnseite 255, 260 angeordnet ist.

In dem Gehäuseinnenraum 405 ist ein erster Ableiter 415 angeordnet, der innenseitig sich an die erste Zellenstirnseite 255 (direkt) anschließt. Auf der zur ersten Zellenstirnseite 255 abgewandten Seite des ersten Ableiters 415, ist eine erste Zellenelektrode 425 angeordnet, die elektrisch mit einer ersten Anschlusselektrode 262 verbunden ist. Die erste Zellenelektrode 425 kann dabei beispielhaft beim Entladen als Kathode ausgebildet sein. Unterseitig schließt sich an die erste Zellenelektrode 425 eine Trennschicht 430 an. Unterseitig der Trennschicht ist beispielhaft in Figur 7 eine zweite Zellenelektrode 435 angeordnet, wobei die zweite Zellenelektrode 435 beispielhaft als Anode beim Entladen ausgebildet ist. Die zweite Zellenelektrode 435 ist mit einer zweiten Anschlusselektrode 264, die in Querrichtung gegenüberliegend zu der ersten Anschlusselektrode 262 angeordnet ist. In Figur 7 ist unterseitig unter der zweiten Zellenelektrode 435 ein zweiter Ableiter 440 angeordnet, wobei der zweite Ableiter 440 plattenförmig ausgebildet ist. Der zweite Ableiter 440 schließt sich innenseitig an die zweite Zellenstirnseite 260 an.

Der erste Ableiter 415, die erste und zweite Zellenelektrode 425, 435, die Trennschicht 430 und der zweite Ableiter 440 sind in einem weiteren Stapel in x-Richtung gestapelt in dem Gehäuseinnenraum 405 angeordnet. Dabei ist eine Haupterstreckungsrichtung jeweils im Wesentlichen in einer yz-Ebene.

Durch das Anliegen der ersten Stirnseite 240 außenseitig am ersten Ableiter beziehungsweise der zweiten Stirnseite 245 am zweiten Ableiter wird beidseitig der Gehäuseinnenraum 405 nahe an den Zellenelektroden 425, 435 gekühlt. Ferner ist durch die parallele Anordnung der ersten Zellenelektrode 425 und der zweiten Zellenelektrode 435 zu den Stirnseiten 240, 245 eine gute Entwärmung der Energiezelle 25 beziehungsweise eine hohe Querschnittsfläche zum Wärmeaustausch zwischen der Stirnseite 240, 245 und der Zellenelektrode 425, 435 sichergestellt.

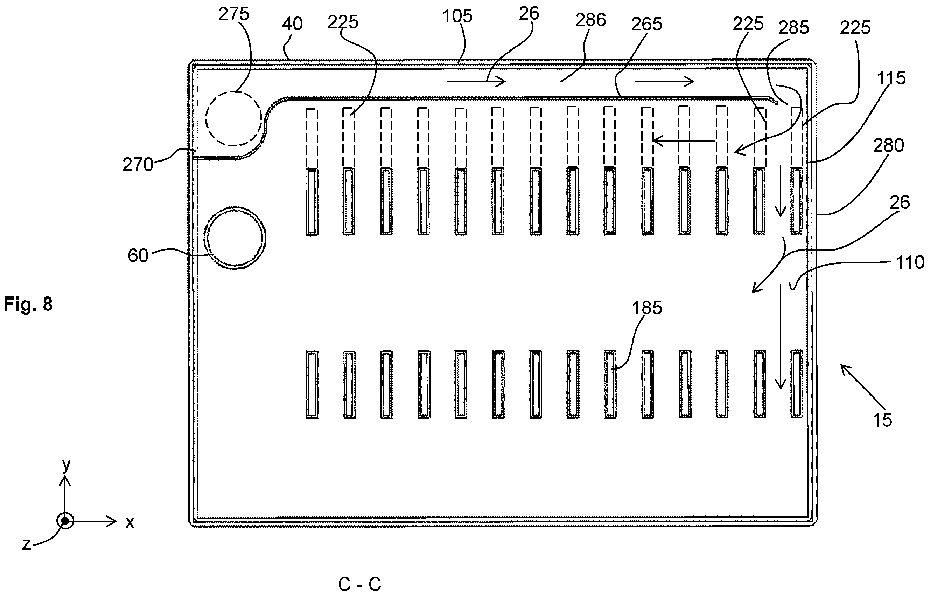

Figur 8 zeigt eine Schnittansicht entlang einer in Figur 1 gezeigten Schnittebene C-C durch den Kühlkörper 15.

Zusätzlich kann in dem ersten Kanal 115 zwischen der zweiten Seitenwand 105 und der dritten Öffnung 225 (in Figur 8 teilweise strichliert dargestellt) ein Einlaufsteg 265 angeordnet sein. Der Einlaufsteg 265 beginnt an einer dritten Stirnseite 270 des Trägerabschnitts 40, der stirnseitig den ersten Kanal 115 begrenzt. Der Einlaufsteg 265 verläuft weiter zwischen einer ersten Mündung 275 des ersten Anschlusskanals 55 am ersten Plattenabschnitt 90 und dem durch den ersten Kanal 115 durchgeführten zweiten Anschlusskanal 60. Der Einlaufsteg 265 erstreckt sich vollständig in Höhenrichtung zwischen dem Zwischensteg 110 und dem ersten Plattenabschnitt 90. Ferner ist der Einlaufsteg 265 seitlich im Wesentlichen an allen dritten Öffnungen 225 vorbeigeführt und endet beabstandet vor der zur dritten Stirnseite 270 gegenüberliegend in Längsrichtung angeordneten vierten Stirnseite 280. Die vierte Stirnseite 280 begrenzt auf der zur dritten Stirnseite 270 gegenüberliegenden Seite. Dabei bildet der Einlaufsteg 265 zusammen mit der vierten Stirnseite 280 in dem ersten Kanal 115 einen ersten Durchlass 285 aus, der in Querrichtung direkt neben der letzten dritten Öffnung 225 angeordnet ist und in Längsrichtung breiter ausgebildet ist als die dritte Öffnung 225. Ferner kann auf den Einlaufsteg 265 auch verzichtet werden.

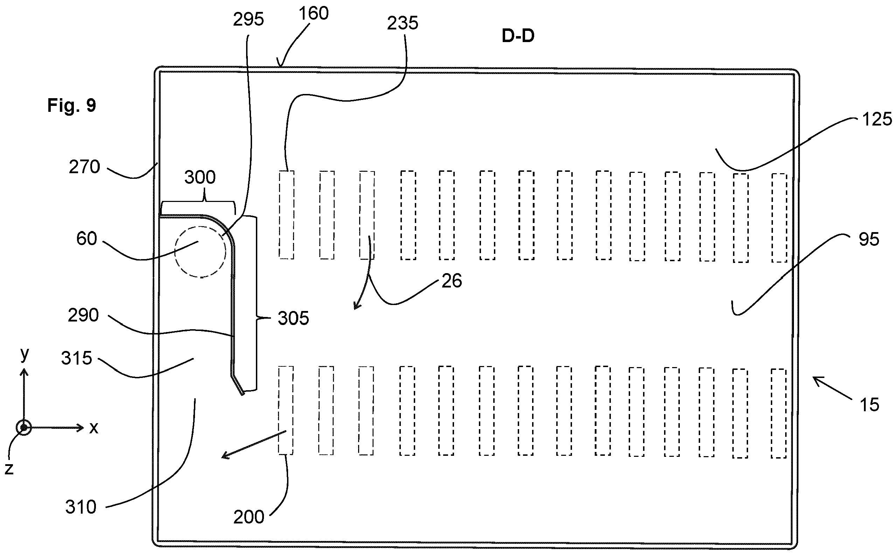

Figur 9 zeigt eine Schnittansicht entlang einer in Figur 1 gezeigten Schnittebene D-D durch den in Figur 1 gezeigten Kühlkörper 15 des elektrischen Energiespeichers 10.

In dem zweiten Kanal 125 kann zwischen dem Zwischensteg 110 und dem zweiten Plattenabschnitt 95 ein Auslaufsteg 290 angeordnet sein. Der Auslaufsteg 290 ist beispielsweise L-förmig ausgebildet und beginnt stirnseitig an der dritten Stirnseite 270. In Querrichtung ist der Auslaufsteg 290 zwischen der vierten Seitenfläche 160 und einer zweiten Mündung 295 angeordnet, an der der zweite Anschlusskanal 60 am Zwischensteg 110 in den zweiten Kanal 125 mündet. Dabei ist der Auslaufsteg 290 im Wesentlichen in Querrichtung direkt angrenzend mit einem ersten Abschnitt 300 in Längsrichtung verlaufend neben der zweiten Mündung 295 angeordnet. Neben dem in Längsrichtung verlaufenden ersten Abschnitt 300 weist der Auslaufsteg 290 einen zweiten Abschnitt 305 auf, der im Wesentlichen in Querrichtung verläuft. Der zweite Abschnitt 305 ist dabei in Längsrichtung zwischen der zweiten Mündung 295 und der zweiten und vierten Öffnung 200, 235 angeordnet.

Der zweite Abschnitt 305 endet in Querrichtung etwa auf halber Höhe der zweiten Öffnung 200. Dabei begrenzt der zweite Abschnitt 305 zusammen mit der dritten Stirnseite 270 einen zweiten Durchlass 310. Zusätzlich kann am zweiten Durchlass 310 der zweite Abschnitt 305 angeschrägt sein. Im Wesentlichen verläuft der Auslaufsteg 290 in Höhenrichtung zwischen dem zweiten Plattenabschnitt 95 und dem Zwischensteg 110 und begrenzt einen Auslaufbereich 315 des zweiten Kanals 125.

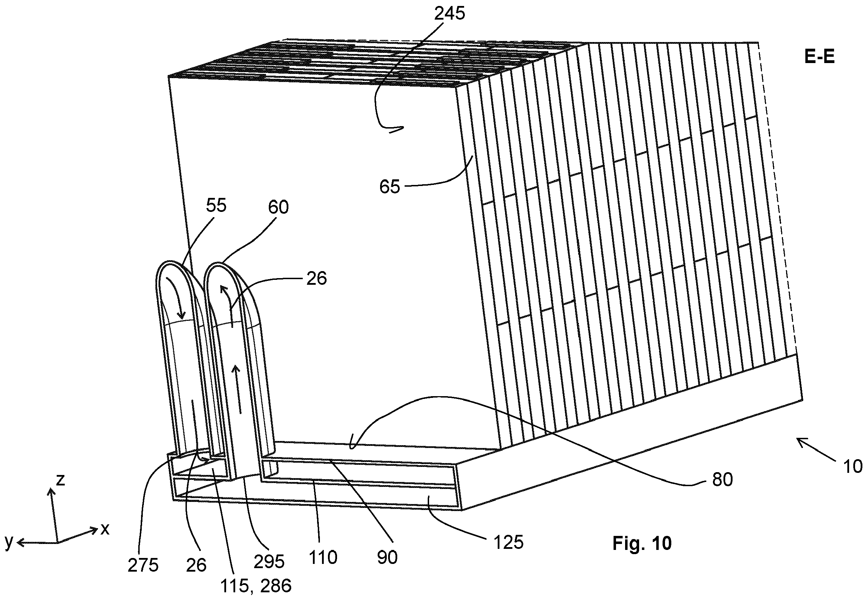

Figur 10 zeigt eine Schnittansicht entlang einer in Figur 1 gezeigten Schnittebene E-E durch den in Figur 1 gezeigten elektrischen Energiespeicher 10.

Um eine besonders kompakte Ausgestaltung des elektrischen Energiespeichers 10 bereitzustellen, ist der erste Anschlusskanal 55 und der zweite Anschlusskanal 60 jeweils in einem beispielhaften 90°-Bogen ausgebildet. Dabei sind der erste und zweite Fluidanschluss 30, 35 in einer gemeinsamen yz-Ebene parallel zu der ersten und zweiten Stirnseite 240, 245 angeordnet. Unterseitig ist der erste Anschlusskanal 55 mit dem ersten Plattenabschnitt 90 verbunden und mündet an dem ersten Plattenabschnitt 90 an der ersten Mündung 275 im ersten Kanal 115, insbesondere im Einlaufbereich 286.

Der zweite Anschlusskanal 60 ist oberseitig an dem ersten Plattenabschnitt 90 und an dem Zwischensteg 110 befestigt. Dabei ist der zweite Anschlusskanal 60 fluiddicht durch den ersten Kanal 115 geführt und mündet an der zweiten Mündung 295 am Zwischensteg 110 im zweiten Kanal 125.

Im Betrieb des elektrischen Energiespeichers 10 und bei Aktivierung des Kühlkreislaufes wird das Kühlfluid 26 über den ersten Fluidanschluss 30 in den ersten Anschlusskanal 55 gefördert (vgl. Figur 9). Das Kühlfluid 26 strömt über die erste Mündung 275 zwischen dem ersten Plattenabschnitt 90 und dem Zwischensteg 110 in den Einlaufbereich 286 ein. Dabei lenkt der Zwischensteg 110 das Kühlfluid 26 um 90° ab, sodass das Kühlfluid 26 parallel zur Anlagefläche 80 strömt.

Das zugeführte (kalte) Kühlfluid 26 (vgl. Figur 8) wird über den Einlaufbereich 286 hin zu dem ersten Durchlass 285 längs der vierten Seitenfläche 160 im ersten Kühlkanal 175 geführt. Dabei kühlt das Kühlfluid 26 unterseitig den ersten Plattenabschnitt 90 seitlich angrenzend zur vierten Seitenfläche 160 ab. Das Kühlfluid 26 tritt am ersten Durchlass 285 aus dem Einlaufbereich 286 aus und verteilt sich im ersten Kanal 115 über die gesamte Längserstreckung und die gesamte Quererstreckung. Dabei kühlt das Kühlfluid 26 unterseitig den ersten Plattenabschnitt 90, sodass die Anlagefläche 80 unterseitig gekühlt ist.

Im Betrieb der Energiezellenanordnung 20 entsteht sowohl beim Laden der Energiezellenanordnung 20 als auch beim Entladen der Energiezellenanordnung 20 Wärme. Durch die gekühlte Anlagefläche 80 wird die Energiezellenanordnung 20 unterseitig gekühlt und durch das Kühlfluid 26 Wärme aus der Energiezellenanordnung 20 aufgenommen. Ferner strömt das Kühlfluid 26 im ersten Kanal 115 (außerhalb des Einlaufbereichs 286) durch den großen Querschnitt des ersten Kanals 115 mit sehr geringer Strömungsgeschwindigkeit, sodass eine turbulente Strömung des Kühlfluids 26 im ersten Kanal 115 vermieden werden kann. Von Vorteil ist, wenn das Kühlfluid 26 in dem ersten und/oder zweiten Kühlkanal 175, 210 zumindest abschnittweise turbulent strömt, um eine besonders gute Kühlung der Energiezellenanordnung 20 zu erzielen. Dazu kann im ersten und/oder zweiten Kühlkanal 175, 210 wenigstens ein Turbulator angeordnet sein.

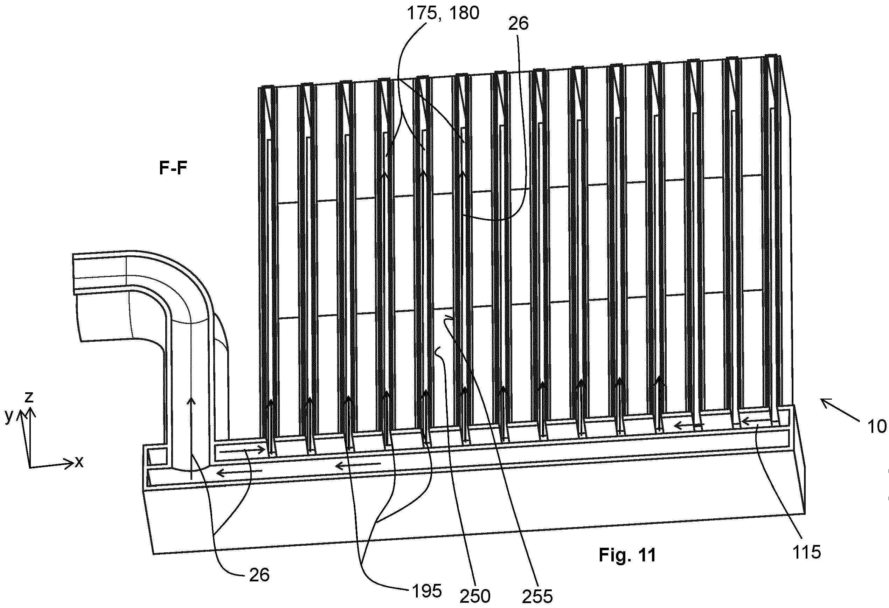

Figur 11 zeigt eine Schnittansicht entlang einer in Figur 1 gezeigten Schnittebene F-F durch den in Figur 1 gezeigten elektrischen Energiespeicher 10.

Aus dem ersten Kanal 115 strömt über die erste Öffnung 195 das Kühlfluid 26 über den ersten Zulauf in jeweils den ersten Kühlkanal 175 im ersten Rippenabschnitt 45. Der erste Kanal 115 dient als Verteiler für das Kühlfluid 26 auf die Kühlkanäle 175, 210. Das Kühlfluid 26 strömt dabei entlang des ersten Kanalabschnitts 180 nach oben hin (in z-Richtung). Der erste Kanalabschnitt 180 ist dabei der ersten Anschlusselektrode 262 zugewandte Teil des ersten Kühlkanals 175. Im Betrieb der Energiezelle 25 erwärmt sich die Energiezelle 25 angrenzend an die Anschlusselektrode 262, 264 stärker als in Querrichtung mittig.

Durch die thermische Kopplung der Verbindungskörper 65, 66 über die erste und zweite Zellenstirnseite 255, 260 mit der Energiezelle 25 wird die an der ersten und zweiten Zellenelektrode 425, 435 entstehende Wärme an den Verbindungskörper 65, 66 übertragen. Der Verbindungskörper 65, 66 übernimmt dabei zusätzlich eine Funktion eines Wärmespreizers. Der Verbindungskörper 65, 66 überträgt jeweils die in der Energiezelle 25 entstehende Wärme an das in der ersten Aufnahme 130 angeordnete Wärmeleitmaterial 170, das die Wärme an den ersten Rippenabschnitt 45 weiterleitet. Der erste Rippenabschnitt 45 bildet eine Art Plattenwärmetauscher aus, wobei das im ersten Kühlkanal 175 strömende Kühlfluid 26 und hierbei insbesondere über den ersten Kanalabschnitt 180 Wärme (elektrodennah zu der Zellenelektrode 425, 435) aus der Energiezelle 25 abgeführt wird. Dadurch kann besonders gut die Erwärmung der Energiezelle 25, beispielsweise an oder nahe der Zellenelektrode 425, 435 und der ersten Anschlusselektrode 262, abgeführt werden, sodass auch eine lokale Überlastung der Energiezelle 25 vermieden werden kann.

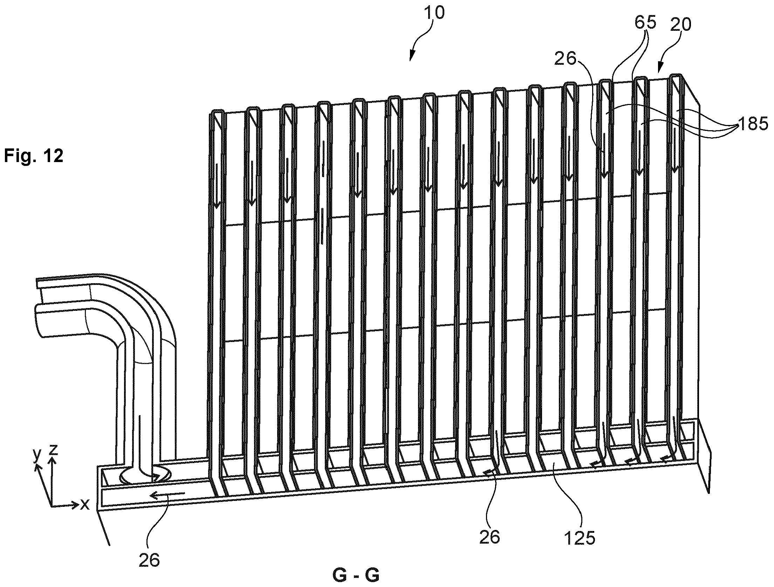

Figur 12 zeigt eine Schnittansicht entlang einer in Figur 1 gezeigten Schnittebene G-G durch den in Figur 1 gezeigten elektrischen Energiespeicher 10.

Das über den ersten Kanalabschnitt 180 nach oben geführte Kühlfluid 26 wird in seine Strömungsrichtung oberseitig umgekehrt und strömt im zweiten Kanalabschnitt 185 nach unten hin entlang des zweiten Kanalabschnitts 185. Auch beim Entlangströmen des zweiten Kanalabschnitts 185 nimmt das Kühlfluid 26 Wärme aus dem Verbindungskörper 65 auf. Der Verbindungskörper 65 fungiert dabei im Zwischenbereich 135 als Wärmespreizer und Wärmeleitelement, um die Wärme auch im Zwischenbereich 135 an den ersten Rippenabschnitt 45 und den zweiten Rippenabschnitt 50 abzuführen. Unterseitig wird durch den ersten Rippenabschnitt 45 fluiddicht das Kühlfluid 26 durch den zweiten Kanalabschnitt 185 in den zweiten Kanal 125 geführt.

Ebenso strömt aus dem ersten Kanal 115 über die dritte Öffnung 225, die als zweiter Zulauf fungiert, das Kühlfluid 26 in den dritten Kanalabschnitt 215 und strömt nach oben hin und kühlt dabei über den Verbindungskörper 65 (elektrodennah zu der zweiten Anschlusselektrode 264) die Energiezelle 25. Oben angelangt wird die Strömungsrichtung des Kühlfluids 26 umgedreht, sodass das Kühlfluid 26 über den vierten Kanalabschnitt 220 nach unten strömt. Dabei wird durch den zweiten Rippenabschnitt 50 das Kühlfluid 26 fluiddicht durch den ersten Kanal 115 zu der vierten Öffnung 235 geführt. Auch hierbei bildet der zweite Rippenabschnitt 50 eine Art Plattenwärmetauscher aus und das Kühlfluid 26 nimmt Wärme, die über den Verbindungskörper 65 an den zweiten Rippenabschnitt 50 übertragen wurde, auf. An der vierten Öffnung 235 tritt das Kühlfluid 26 in den zweiten Kanal 125 ein.

Der zweite Kanal 125 dient als Sammler für das rückströmende, erwärmte Kühlfluid 26 aus den Kühlkanälen 175, 210. Durch den großen Querschnitt des zweiten Kanals 125 strömt das Kühlfluid 26 (vgl. Figur 8) in erwärmtem Zustand beabstandet zur Energiezellenanordnung 20, sodass eine Erwärmung von kühleren Bereichen der Energiezellenanordnung 20 durch das erwärmte Kühlfluid 26 vermieden wird. Das Kühlfluid 26 strömt dabei angrenzend zur dritten Stirnseite 270 in den Auslaufbereich 315 des zweiten Kanals 125 und von dort über die zweite Mündung 295 in den zweiten Anschlusskanal 60. An dem zweiten Fluidanschluss 35 wird das erwärmte Kühlfluid 26 weiter wieder zurück in den Kreislauf geführt, wobei das erwärmte Kühlfluid 26 beispielsweise in einem Wärmetauscher wieder abgekühlt wird, sodass das Kühlfluid 26 im Kreislauf zirkulieren kann und abermals die Energiezellenanordnung 20 kühlen kann.

Die oben beschriebene Ausgestaltung des Kühlkörpers 15 hat den Vorteil, dass der elektrische Energiespeicher 10 besonders kompakt ausgebildet ist und eine hohe Energiedichte bei gleichzeitig einer guten Kühlung bereitgestellt werden kann. Dadurch kann der elektrische Energiespeicher 10 insbesondere einen hohen Strom zum Antrieb des Antriebsmotos des Fahrzeugs bereitstellen.

Ferner wird auch eine lokale Überhitzung durch die elektrodennahe Anordnung des ersten und zweiten Rippenabschnitts 45, 50 und damit des ersten und zweiten Kühlkanals 175, 210 der Energiezelle 25 verhindert. Des Weiteren wird durch die breite Ausgestaltung des ersten Kanals 115 und des zweiten Kanals 125 eine turbulente Strömung des Kühlfluids 26, insbesondere im ersten Kanal 115 vermieden. Im ersten und zweiten Kühlkanal 175, 210 kann das erste Kühlfluid 26 zumindest abschnittsweise turbulent strömen, sodass eine besonders gute Wärmeübergang und somit eine besonders gute Kühlung der Wärmequelle 27 von drei Seiten her sichergestellt werden kann. Ferner kann durch die in den Reihen 70, 75 angeordneten ersten und zweiten Rippenabschnitte 45, 50 sowie den Verbindungskörper 65, die identisch jeweils zueinander ausgebildet sind, der Kühlkörper 15 mit einer geringen Anzahl von Werkzeugen hergestellt werden.

Auch kann der Kühlkörper 15 auf einfache Weise, beispielsweise durch Verlängerung des Trägerabschnitts 40 und einer entsprechenden Anzahl von Erhöhung oder Verringerung der Rippenabschnitte 45, 50 an die Ausgestaltung der Energiezellenanordnung 20 angepasst werden.

Ferner ist durch die in den Figuren 1 bis 11 gezeigte kompakte Ausgestaltung des elektrischen Energiespeichers 10 ein Spaltmaß zwischen der Energiezellenanordnung 20 und dem Kühlkörper 15 besonders gering, sodass, insbesondere in der Aufnahme 130, 140, ein Bedarf von thermisch leitfähigem Wärmeleitmaterial 170 reduziert ist. Auch wirkt sich dies sehr positiv auf eine maximal erzielbare Wärmedurchgangszahl zwischen Kühlfluid 26 und Wärmequelle 27 aus.

Ferner stellt sich durch den Einlaufsteg 265 und den Auslaufsteg 290 ein gleichmäßiger Massenstrom von Kühlfluid 26 über die Kühlkanäle 175, 210 und alle Strömungswege des Kühlfluids 26 ein, da das Kühlfluid 26 über alle möglichen Strömungswege zum Strömen eine für das Kühlfluid 26 zurückzulegende Weglänge des Kühlfluids 26 identisch ist.

Ferner hat die oben beschriebene Ausgestaltung den Vorteil, dass ein gleicher Massenstrom sowohl über alle ersten Kühlkanäle 115 als auch über alle zweiten Kühlkanäle 210 sichergestellt ist, sodass die Kühlung der Wärmequelle 27 gleichmäßig erfolgt und eine lokale Überhitzung der Wärmequelle 27, insbesondere der Energiezelle 26 und/oder der Elektronikebene 22 der Leistungselektronik vermieden wird.

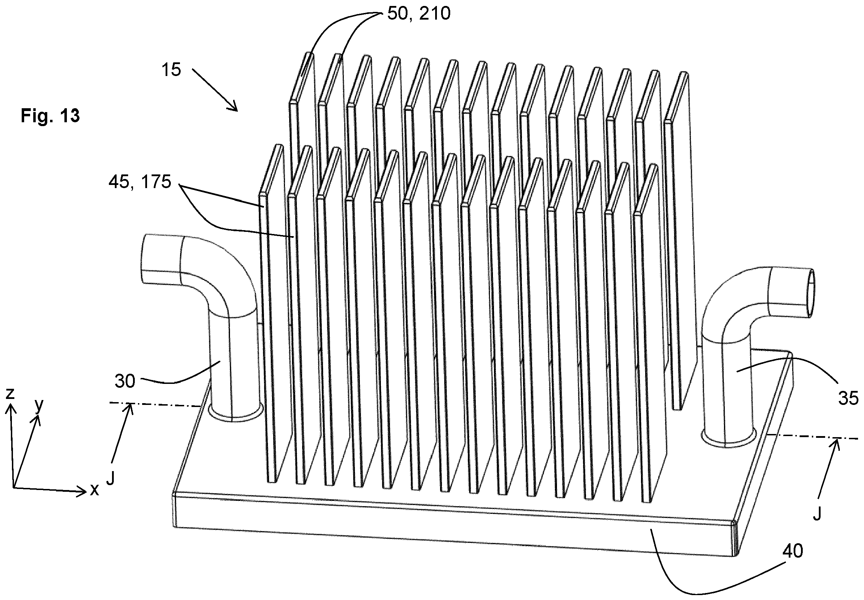

Figur 13 zeigt eine perspektivische Darstellung des Kühlkörpers 15 des elektrischen Systems 5 in einer Weiterbildung des in den Figuren 1 bis 12 gezeigten Kühlkörpers 15.

Das elektrische System 5 ist im Wesentlichen identisch zu dem in den Figuren 1 bis 12 gezeigten elektrischen Systems 5 ausgebildet. Im Folgenden wird ausschließlich auf die Unterschiede der in Figur 13 gezeigten Weiterbildung gegenüber der in den Figuren 1 bis 12 gezeigten Ausführungsform eingegangen.

In der in Figur 13 gezeigten Weiterbildung des Kühlkörpers 15 sind der erste Fluidanschluss 30 und der zweite Fluidanschluss 35 in Längsrichtung auf an zwei gegenüberliegenden Seiten des Trägerabschnitts 40 angeordnet, sodass in Längsrichtung (x-Richtung) die Anordnung aus den Rippenabschnitten 45, 50 und Verbindungskörpern 65, 66 sowie der Energiespeicherzellenanordnung 20 und/oder der Leistungselektronik 21 zwischen dem ersten Fluidanschluss 30 und dem zweiten Fluidanschluss 35 angeordnet ist.

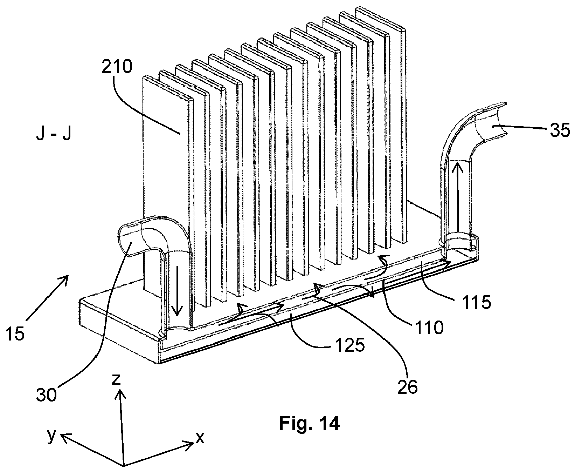

Figur 14 zeigt eine Schnittansicht entlang einer in Figur 13 gezeigten Schnittebene J-J durch den in Figur 13 gezeigten Kühlkörper 15.

Durch die in Längsrichtung gegenüberliegende Anordnung des ersten Fluidanschlusses 30 und des zweiten Fluidanschlusses 35 kann auf die Anordnung des Einlaufstegs 265 in dem ersten Kanal 115 und die Anordnung des Auslaufstegs 295 in dem zweiten Kanal 125 verzichtet werden. Dadurch ist der Kühlkörper 15 besonders einfach ausgebildet und kann besonders einfach gefertigt werden.

Die gegenüberliegende Anordnung des ersten und zweiten Fluidanschlusses 30, 35 hat ferner den Vorteil, dass über alle möglichen Strömungswege des Strömens des Kühlfluid 26 über die Kühlkanäle 175, 210 die Strömungswege eine identische Weglänge aufweisen. Dadurch kann sichergestellt werden, dass alle Kühlabschnitte mit einem gleichen Massenstrom von Kühlfluid 26 durchströmt werden und dadurch die Rippenabschnitte 45, 50 gleich stark gekühlt werden. Dadurch können Hotspots am Verbindungskörper 65, 66 vermeiden werden und eine gute Kühlung der Elektronikebenen 22 und/oder der elektrischen Energiezellen 25 sichergestellt werden.

### Bezugszeichenliste

- 5: elektrisches System
- 10: elektrischer Energiespeicher
- 15: Kühlkörper
- 19: Wärmequellenanordnung
- 20: Energiezellenanordnung
- 21: Leistungselektronik
- 22: Elektronikebene
- 25: Energiezelle
- 26: Kühlfluid
- 27: Wärmequelle
- 30: erster Fluidanschluss
- 35: zweiter Fluidanschluss
- 40: Trägerabschnitt
- 45: erster Rippenabschnitt
- 50: zweiter Rippenabschnitt
- 51: Stapel
- 55: erster Anschlusskanal
- 60: zweiter Anschlusskanal
- 65: Verbindungskörper
- 66: weiterer Verbindungskörper
- 70: erste Reihe
- 75: zweite Reihe
- 80: Anlagefläche
- 85: Teilbereich
- 90: erster Plattenabschnitt
- 95: zweiter Plattenabschnitt
- 100: erste Seitenwand
- 105: zweite Seitenwand
- 110: Zwischensteg
- 115: erster Kanal
- 120: Umgebung
- 125: zweiter Kanal
- 129: Unterseite (des Verbindungskörpers)
- 130: erste Aufnahme
- 135: Zwischenbereich
- 140: zweite Aufnahme
- 141: erster Teilabschnitt
- 142: zweiter Teilabschnitt
- 143: Mitte (des Verbindungskörpers)
- 145: erste Seitenfläche
- 150: zweite Seitenfläche
- 155: dritte Seitenfläche
- 160: vierte Seitenfläche
- 165: Oberseite
- 170: Wärmeleitmittel
- 175: erster Kühlkanal
- 180: erster Kanalabschnitt
- 185: zweiter Kanalabschnitt
- 190: erste Trennwand
- 195: erste Öffnung
- 196: erster Teilabschnitt
- 200: zweite Öffnung
- 201: zweiter Teilabschnitt
- 205: Symmetrieebene
- 210: zweiter Kühlkanal
- 215: dritter Kanalabschnitt
- 220: vierter Kanalabschnitt
- 225: dritte Öffnung
- 226: dritter Teilbereich
- 230: zweite Trennwand
- 235: vierte Öffnung
- 236: vierter Teilbereich
- 240: erste Stirnseite
- 245: zweite Stirnseite
- 250: Zwischenraum
- 255: erste Zellenstirnseite
- 260: zweite Zellenstirnseite
- 261: fünfte Seitenfläche
- 262: erste Anschlusselektrode
- 263: sechste Seitenfläche
- 264: zweite Anschlusselektrode
- 265: Einlaufsteg
- 270: dritte Stirnseite
- 275: erste Mündung
- 280: vierte Stirnseite
- 285: erster Durchlass
- 286: Einlaufbereich
- 290: Auslaufsteg
- 295: zweite Mündung
- 300: erster Abschnitt
- 305: zweiter Abschnitt
- 310: zweiter Durchlass
- 315: Auslaufbereich
- 400: Gehäuse
- 405: Gehäuseinnenraum
- 410: Rand
- 415: erster Ableiter
- 425: erste Zellenelektrode
- 430: Trennschicht
- 435: zweite Zellenelektrode
- 440: zweiter Ableiter

## Patentansprüche

1. Kühlkörper (15) für ein elektrisches System (5), insbesondere für einen elektrischen Energiespeicher (10),
- wobei der Kühlkörper (15) einen ersten Rippenabschnitt (45) mit einem fluiddicht ausgebildeten und mit einem Kühlfluid (26) füllbaren ersten Kühlkanal (175), einen zweiten Rippenabschnitt (50) mit einem fluiddicht ausgebildeten und mit dem Kühlfluid (26) füllbaren zweiten Kühlkanal (210) und einen Verbindungskörper (65, 66) aufweist,
- wobei der Verbindungskörper (65, 66) thermisch leitfähig ausgebildet ist und eine sich in Querrichtung erstreckende erste Stirnseite (240) zur Anlage an und thermischen Kopplung mit einer Wärmequelle (27) einer Wärmequellenanordnung (19) aufweist,
- wobei der Verbindungskörper (65, 66) eine erste Aufnahme (130) und eine in Querrichtung versetzt angeordnete zweite Aufnahme (140) aufweist,
- wobei der erste Rippenabschnitt (45) und der zweite Rippenabschnitt (50) in Querrichtung beabstandet zueinander angeordnet sind,
- wobei der erste Rippenabschnitt (45) in die erste Aufnahme (130) und der zweite Rippenabschnitt (50) in die zweite Aufnahme (140) des Verbindungskörpers (65, 66) eingreifen und thermisch mit dem Verbindungskörper (65, 66) gekoppelt sind.

2. Kühlkörper (15) nach Anspruch 1,
- aufweisend wenigstens einen beabstandet zu dem Verbindungskörper (65) angeordneten und vorzugsweise identisch zu dem Verbindungskörper (65) ausgebildeten, weiteren Verbindungskörper (66),
- wobei der weitere Verbindungskörper (66) auf einer zum Verbindungskörper (65) zugewandten Seite eine zweite Stirnseite (245) aufweist,
- wobei die erste Stirnseite (240) und die zweite Stirnseite (245) einen Zwischenraum (250) zur Aufnahme der Wärmequelle (27) begrenzen,
- wobei vorzugsweise der Zwischenraum (250) nutförmig ausgebildet ist.

3. Kühlkörper (15) nach einem der vorhergehenden Ansprüche,
- aufweisend mehrere entlang einer Achse versetzt zueinander angeordnete erste Rippenabschnitte (45),
- wobei die ersten Rippenabschnitte (45) parallel zueinander ausgerichtet sind,
- wobei jeweils ein erster Rippenabschnitt (45) in einen Verbindungskörper (65, 66) eingreift und thermisch mit dem jeweiligen Verbindungskörper (65, 66) verbunden ist.

4. Kühlkörper (15) nach einem der vorhergehenden Ansprüche,
- wobei der Verbindungskörper (65) plattenförmig ausgebildet ist,
- und/oder
- wobei der erste Kühlkanal (175) jeweils einen auf einer dem Verbindungskörper (65) abgewandten Seite angeordneten ersten Zulauf und einen ersten Rücklauf aufweist,
- wobei der erste Zulauf auf einer der Seitenfläche (145) des Verbindungskörpers (65, 66) zugewandten Seite und der erste Rücklauf auf einer der Seitenfläche (145) gegenüberliegend in Querrichtung angeordneten weiteren Seitenfläche (155) des Verbindungskörpers (65, 66) zugewandten Seite angeordnet ist.

5. Kühlkörper (15) nach einem der vorhergehenden Ansprüche,
- wobei der erste Rippenabschnitt (45) einen ersten minimalen Abstand (a₁) zu einer Seitenfläche (145) des Verbindungskörpers (65, 66) und einen zweiten minimalen Abstand (a₂) zu einer der Seitenfläche (145) gegenüberliegend in Querrichtung angeordneten weiteren Seitenfläche (155) aufweist,
- wobei der erste minimale Abstand (a₁) unterschiedlich zu dem zweiten minimalen Abstand (a₂) ist,
- wobei der erste minimale Abstand (a₁) vorzugsweise kleiner als die Hälfte des zweiten minimalen Abstands (a₂) ist.

6. Kühlkörper (15) nach Anspruch 5,
- wobei der zweite Rippenabschnitt (50) einen dritten minimalen Abstand (a₃) zu der weiteren Seitenfläche (155) und einen vierten minimalen Abstand (a₄) zu dem ersten Rippenabschnitt (45) aufweist, wobei der vierte minimale Abstand (a₄) größer als der dritte minimale Abstand (a₃) ist.

7. Kühlkörper (15) nach einem der Ansprüche 4 bis 6,
- wobei die Seitenfläche (145) und/oder die weitere Seitenfläche (155) plan ausgebildet ist,
- wobei vorzugsweise die Seitenfläche (145) parallel zu der weiteren Seitenfläche (155) ausgerichtet ist,
- und/oder
- wobei die Seitenfläche (145) geneigt, vorzugsweise senkrecht zu der ersten Stirnseite (240) ausgerichtet ist und vorzugsweise direkt an die erste Stirnseite (240) angrenzt.

8. Kühlkörper (15) nach einem der vorhergehenden Ansprüche,
- wobei der zweite Kühlkanal (210) jeweils einen zweiten Zulauf und einen zweiten Rücklauf aufweist,
- wobei der zweite Rücklauf auf einer dem ersten Rippenabschnitt (45) zugewandten Seite und der zweite Zulauf auf einer dem ersten Rippenabschnitt (45) abgewandten Seite angeordnet ist.

9. Kühlkörper (15) nach einem der vorhergehenden Ansprüche,
- aufweisend einen sich in Längsrichtung erstreckenden Trägerabschnitt (40) mit einer Anlagefläche (80) zur Anordnung an der Energiezellenanordnung (20) und/oder der Leistungselektronik (21),
- wobei der Trägerabschnitt (40) innenseitig einen sich parallel zur Anlagefläche (80) erstreckenden ersten Kanal (115) und einen fluiddicht gegenüber dem ersten Kanal (115) ausgebildeten und parallel zur Anlagefläche (80) ausgerichteten zweiten Kanal (125) begrenzt,
- wobei der erste Kanal (115) und der zweite Kanal (125) ausgebildet sind, das Kühlfluid (26) zu führen,
- wobei der erste Kanal (115) und der zweite Kanal (125) in einer Richtung senkrecht zu der Anlagefläche (80) zumindest abschnittsweise überdeckend ausgebildet sind,
- wobei der erste Rippenabschnitt (45) und der Verbindungskörper (65) geneigt, vorzugsweise senkrecht, zu der Anlagefläche (80) angeordnet sind,
- wobei vorzugsweise der erste Kanal (115) und/oder der zweite Kanal (125) sich im Wesentlichen über eine gesamte Innenbreite (b₁, b₂) des Trägerabschnitts (40) erstreckt.

10. Kühlkörper (15) nach Anspruch 9,
- wobei der Trägerabschnitt (40) einen ersten Plattenabschnitt (90) und einen parallel zu dem ersten Plattenabschnitt (90) angeordneten zweiten Plattenabschnitt (95) aufweist,
- wobei an dem ersten Plattenabschnitt (90) außenseitig die Anlagefläche (80) angeordnet ist,
- wobei zwischen dem ersten Plattenabschnitt (90) und dem zweiten Plattenabschnitt (95) ein plattenförmig ausgebildeter Zwischensteg (110) angeordnet ist,
- wobei der erste Plattenabschnitt (90) und der Zwischensteg (110) den ersten Kanal (115) und der zweite Plattenabschnitt (95) und der Zwischensteg (110) den zweiten Kanal (125) begrenzen,
- wobei der Trägerabschnitt (40) eine erste Seitenwand (100) und eine beabstandet zur ersten Seitenwand (100) angeordnete zweite Seitenwand (105) aufweist,
- wobei die beiden Seitenwände (100, 105) plattenförmig ausgebildet und geneigt, vorzugweise senkrecht zu dem ersten Plattenabschnitt (90), ausgerichtet sind,
- wobei die erste Seitenwand (100) an einer ersten Seite und die zweite Seitenwand (105) an einer zur ersten Seite gegenüberliegenden Seite den ersten Kanal (115) und den zweiten Kanal (125) begrenzen.

11. Kühlkörper (15) nach Anspruch 10,
- aufweisend einen Einlaufsteg (265)
- wobei der Einlaufsteg (265) zwischen der zweiten Seitenwand (105) und dem zweiten Kühlkanal (210) in dem ersten Kanal (115) angeordnet ist,
- wobei der Einlaufsteg (265) an einer dritten Stirnseite (270) des Trägerabschnitts (40) beginnt und seitlich an allen in dem ersten Kanal (115) mündenden zweiten Kühlkanälen (210) vorbeigeführt ist,
- wobei der Einlaufsteg (265) sich in einer Höhenrichtung vollständig zwischen dem Zwischensteg (110) und dem ersten Plattenabschnitt (90) erstreckt.

12. Elektrisches System (5), insbesondere elektrischer Energiespeicher (10), für ein Fahrzeug,
- aufweisend einen Kühlkörper (15) nach einem der vorhergehenden Ansprüche und eine Wärmequellenanordnung (19) mit wenigstens einer Wärmequelle, insbesondere wenigstens eine Energiezellenanordnung (20) mit wenigstens einer Energiezelle (25) und/oder eine Leistungselektronik (21) mit wenigstens einer Elektronikebene (22),
- wobei der Kühlkörper (15) mit der Wärmequellenanordnung (19) thermisch gekoppelt und ausgebildet ist die Wärmequellenanordnung (19) zu kühlen.

13. Elektrisches System (5) nach Anspruch 12 und Anspruch 2,
- wobei die Wärmequellenanordnung (19) eine Energiezellenanordnung (20) mit wenigstens einer Energiezelle (25) aufweist,
- wobei die Energiezelle (25) in dem Zwischenraum (250) angeordnet ist,
- wobei die Energiezelle (25) mit einer ersten Zellenstirnseite (255) an der ersten Stirnseite (240) anliegt und thermisch mit dem Verbindungskörper (65) verbunden ist,
- wobei die Energiezelle (25) mit einer zur ersten Zellenstirnseite (255) gegenüberliegend angeordneten zweiten Zellenstirnseite (260) an der zweiten Stirnseite (245) des weiteren Verbindungskörpers (66) anliegt und mit dem weiteren Verbindungskörper (66) thermisch gekoppelt ist.

14. Elektrisches System (5) nach Anspruch 13,
- wobei die Energiezelle (25) im Wesentlichen den Zwischenraum (250) vollständig ausfüllt
- oder
- wobei in Querrichtung mehrere Energiezellen (25) der Energiezellenanordnung (20) im Zwischenraum (250) angeordnet sind,
- wobei jede der Energiezellen (25) mit der ersten Zellenstirnseite (255) an der ersten Stirnseite (240) und mit der zweiten Zellenstirnseite (260) an der zweiten Stirnseite (245) anliegt und thermisch mit dem Verbindungskörper (65) und dem weiteren Verbindungskörper (66) gekoppelt sind,
- wobei vorzugsweise die Energiezelle (25) und der Verbindungskörper (65, 66) miteinander verpresst sind.

15. Verfahren zur Herstellung eines elektrischen Energiespeichers (10), vorzugsweise nach einem der Ansprüche 12 bis 14,
- wobei abwechselnd ein Verbindungskörper (65, 66) eines Kühlkörpers (15) und eine Energiezelle (25) und/oder eine Elektronikebene (22) in einem Stapel (51) angeordnet werden,
- wobei jeweils ein erster Rippenabschnitt (45) und ein zweiter Rippenabschnitt (50) in jeweils einen zugeordneten Verbindungskörper (65, 66) geschoben werden,
- wobei der Stapel (51) vorzugsweise in Längsrichtung verpresst wird.
